(19) Europäisches Patentamt / European Patent Office / Office européen des brevets

(11) **EP 3 169 738 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **15734710.5**

(22) Anmeldetag: **13.07.2015**

(51) Int Cl.:
***C09J 4/00*** (2006.01) ***C09J 133/06*** (2006.01)
***C09J 101/00*** (2006.01) ***C09J 103/00*** (2006.01)
***C09J 105/00*** (2006.01)

(86) Internationale Anmeldenummer:
**PCT/EP2015/065946**

(87) Internationale Veröffentlichungsnummer:
**WO 2016/008834 (21.01.2016 Gazette 2016/03)**

(54) **BINDEMITTEL FÜR BODENBELAGSKLEBSTOFFE**

BINDER FOR ADHESIVES FOR FLOOR-COVERINGS

LIANT POUR ADHÉSIFS DE REVÊTEMENT DE SOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2014 EP 14177022**

(43) Veröffentlichungstag der Anmeldung:
**24.05.2017 Patentblatt 2017/21**

(73) Patentinhaber: **BASF SE**
**67056 Ludwigshafen am Rhein (DE)**

(72) Erfinder:
- **HOUILLOT, Lisa**
**68165 Mannheim (DE)**
- **WILMS, Valerie**
**68165 Mannheim (DE)**
- **URIBE AROCHA, Paola**
**67435 Neustadt (DE)**
- **RÜLLMANN, Maximilian**
**64646 Heppenheim (DE)**
- **GERST, Matthias**
**67487 Maikammer (DE)**

(74) Vertreter: **BASF IP Association**
**BASF SE**
**G-FLP-C006**
**67056 Ludwigshafen (DE)**

(56) Entgegenhaltungen:
**WO-A1-95/33775** **WO-A1-2012/117017**
**WO-A1-2012/136605** **WO-A1-2013/045259**
**DE-A1- 4 435 422** **US-A1- 2012 225 978**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft eine Polymerisatdispersion, umfassend A) mindestens eine erste Phase, enthaltend a) wenigstens ein Polymerisat P, aufgebaut aus 1 bis 99,9 Gew.-% wenigstens eines Esters aus ethylenisch ungesättigten Monomeren, als Monomer A, 0 bis 20 Gew.-% wenigstens eines ethylenisch ungesättigten Carbonsäurenitrils, als Monomer B, 0,1 bis 5 Gew.-% wenigstens eines säuregruppenhaltigen ethylenisch ungesättigten Monomeren, als Monomer C, 0 bis 5 Gew.-% wenigstens eines Monomeren, das allein oder mit einem Vernetzungsmittel vernetzend wirkt und welches verschieden ist von den Monomeren A bis C, als Monomer D, 0 bis 20 Gew.-% wenigstens eines ethylenisch ungesättigten Monomeren, dessen Homopolymerisat eine Glasübergangstemperatur ≥ 50 °C aufweist und welches sich von den Monomeren A bis D unterscheidet, als Monomer E, wobei die Summe der Gesamtmenge der Monomere A bis E 100 Gew.-% ergibt, a1) gegebenenfalls mindestens eine Polymersaat, b) 10 bis 60 Gew.-Teile, bezogen auf 100 Gew.-Teile Polymerisat P, wenigstens einer Saccharidverbindung S, und B) eine zweite Phase, enthaltend c) mindestens ein Lösungsmittel. Die vorliegende Erfindung betrifft auch ein Verfahren zur Herstellung der erfindungsgemäßen Polymerisatdispersion, ein Polymerisationspulver, eine Formulierung zum Kleben umfassend die erfindungsgemäße Polymerisatdispersion sowie die Verwendung der erfindungsgemäßen Formulierung als Klebstoff.

Polymerisatdispersionen, insbesondere wässrige Polymerisatdispersionen, sind allgemein bekannt. Es handelt sich dabei um fluide Systeme, die Polymerisatpartikel als disperse Phase in wässrigem Dispergiermedium dispers verteilt enthalten. Diese Polymerisatpartikel bestehen aus mehreren ineinander verschlungenen Polymerisatketten und werden auch als Polymerlatex bezeichnet. Wässrige Polymerisatdispersionen werden in einer Vielzahl von technischen Anwendungen beispielsweise als Bindemittel eingesetzt.

Grundsätzliche Anforderungen an Klebstoffe, Bindemittel und auch an Bodenbelagsklebstoffe sind eine gute Adhäsion des Klebstoffs zum Substrat und eine gute Kohäsion, d. h. ein guter Zusammenhalt in der Klebstoffschicht. Die gleichzeitige Optimierung dieser Eigenschaften ist problematisch, da in der Regel eine Verbesserung der adhäsiven Eigenschaften mit einer Verringerung der kohäsiven Eigenschaften eines Klebstoffs einhergeht und umgekehrt.

Bei Bodenbelagsklebstoffen sind neben den mechanischen Anforderungen Emissionen zu berücksichtigen. Diese sollten so niedrig wie möglich gehalten werden, was zu schaffen ist, wenn in der Formulierung auf Lösungsmittel und hochsiedende Lösungsmittel verzichtet wird. Diesbezüglich gelten folgende wässrige Bindemittel für Bodenbelagsklebstoffe als Stand der Technik: WO2007020201, US7112626, DE19725038.

Die WO 2012/117017 A1 beschreibt eine wässrige Bindemittelzusammensetzung, enthaltend

a) wenigstens ein Polymerisat P, aufgebaut aus wenigstens eines säuregruppenhaltigen ethylenisch ungesättigten Monomeren, wenigstens eines ethylenisch ungesättigten Carbonsäurenitrils oder-dinitrils, wenigstens eines vernetzend wirkenden Monomeren mit wenigstens zwei nichtkonjugierten ethylenisch ungesättigten Gruppen, wenigstens eines $\alpha,\beta$-monoethylenisch ungesättigten $C_3$- bis $C_6$-Mono- oder Dicarbonsäureamids, wenigstens eines ethylenisch ungesättigten Monomeren, dessen Homopolymerisat eine Glasübergangstemperatur ≤ 30 °C aufweist und welches sich von den vorstehend genannten Monomeren unterscheidet, und wenigstens eines ethylenisch ungesättigten Monomeren, dessen Homopolymerisat eine Glasübergangstemperatur ≥ 50 °C aufweist und welches sich von den vorstehenden Monomeren ebenfalls unterscheidet, in einpolymerisierter Form, und
b) wenigstens eine Saccharidverbindung S.

Diese Bindemittelzusammensetzung kann unter anderen als Bindemittel für Klebstoffe oder Bodenbelagsklebstoffe verwendet werden. Dabei sind allerdings die Klebeigenschaften nicht alle zufriedenstellend, was auf die Bindemittelzusammensetzung zurückzuführen ist, da sie wenigstens 30 Gew.% eines ethylenisch ungesättigten Monomeren enthält, dessen Homopolymerisat eine Glasübergangstemperatur ≥ 50 °C aufweist.

Bei Bodenbelagsklebstoffen sind insbesondere die Klebeigenschaften im nassen und trockenen Zustand wichtig. Das heißt, dass der Klebstoff sowohl in den ersten Minuten nach dem Verlegen des Klebstoffes, als auch nach längerer Ablüftzeit eine ausreichende Klebrigkeit aufweisen muss. Diese beiden Eigenschaften, die als Nassanzugsvermögen und Trockenanfass-Vermögen bezeichnet werden, sind gegenläufig. Die Verbesserung der einen Eigenschaft hatte bisher stets die Verschlechterung der jeweils anderen Eigenschaft zur Folge.

Daher bestand die Aufgabe der vorliegenden Erfindung darin, eine Polymerisatdispersion bereitzustellen, die die Nachteile des Standes der Technik behebt. Insbesondere sollte eine Polymerisatdispersion bereitgestellt werden, die vorteilhafterweise auf einem Emulsionspolymerisat basiert und als Bindemittel für einen Klebstoff, insbesondere einen Bodenbelagsklebstoff, geeignet ist. Mit einer solchen Klebstoff-Formulierung kann ein verbessertes Trockenanfass-Vermögen bei erhaltenen Nassanzugvermögen-Werten erreicht werden.

Die Aufgabe wird gelöst durch eine Polymerisatdispersion, umfassend

A) mindestens eine erste Phase, enthaltend

a) wenigstens ein Polymerisat P, ausschließlich aufgebaut aus 1 bis 99,9 Gew.-% wenigstens eines Esters aus ethylenisch ungesättigten Monomeren, als Monomer A,
0 bis 20 Gew.-% wenigstens eines ethylenisch ungesättigten Carbonsäurenitrils, als Monomer B,
0,1 bis 5 Gew.-% wenigstens eines säuregruppenhaltigen ethylenisch ungesättigten Monomeren, als Monomer C,
0 bis 5 Gew.-% wenigstens eines Monomeren, das allein oder mit einem Vernetzungsmittel vernetzend wirkt und welches verschieden ist von den Monomeren A bis C, als Monomer D, 0 bis 10 Gew.-% wenigstens eines ethylenisch ungesättigten Monomeren, dessen Homopolymerisat eine Glasübergangstemperatur ä 50 °C aufweist und welches sich von den Monomeren A bis D unterscheidet, als Monomer E ausgewählt aus der Gruppe bestehend aus Styrol, α-Methylstyrol, o- oder p-Vinyltoluol, p-Acetoxystyrol, p-Bromstyrol, p-tert.-Butylstyrol, o-, m- oder p-Chlorstyrol, Methylmethacrylat, tert.-Butylmethacrylat, Ethylmethacrylat, Isobutylmethacrylat, Cyclohexylmethacrylat, tert.-Butylvinylether oder Cyclohexylvinylether, wobei die Summe der Gesamtmenge der Monomere A bis E 100 Gew.-% ergibt,
a1) gegebenenfalls mindestens eine Polymersaat,
b) 10 bis 60 Gew.-Teile, bezogen auf 100 Gew.-Teile Polymerisat P, wenigstens einer Saccharidverbindung S, und

B) eine zweite Phase, enthaltend

c) mindestens ein Lösungsmittel.

Die Aufgabe wird zudem gelöst durch das erfindungsgemäße Verfahren zur Herstellung der erfindungsgemäßen Polymerisatdispersion, der erfindungsgemäßen Formulierung zum Kleben und der erfindungsgemäßen Verwendung der Formulierung als Klebstoff gemäß den Merkmalen aus den Ansprüchen.
Im Sinne der vorliegenden Erfindung wird unter einer Dispersion ein Gemenge von Stoffen verstanden, die nicht chemisch miteinander verbunden sind. Dabei wird ein Stoff (dispergierte Phase, disperse Phase oder Nebenphase) möglichst fein in einem anderem Stoff (Dispersionsmittel, Dispergens, kontinuierliche Phase oder Dispersionsmedium) verteilt.
Im Sinne der vorliegenden Erfindung können die erste Phase die disperse Phase und die zweite Phase das Dispersionsmedium darstellen.
Dabei können das Polymerisat P und das Lösungsmittel, beispielsweise Wasser, eine Dispersion bilden. Das Polymerisat P kann dabei fest oder flüssig vorliegen. Vorzugsweise liegt das Polymerisat P fest vor. Die erfindungsgemäße Polymerisatdispersion kann auch als wässrige Polymerisatdispersion oder wässriges Emulsionspolymerisat bezeichnet werden.

Unter einem Polymerisat P kann im Sinne der vorliegenden Erfindung ein Gemisch von Polymeren verstanden werden, das bei einer Bildungsreaktion aus Monomeren zu Makromolekülen entsteht.

Im Sinne der vorliegenden Erfindung bedeutet "Polymerisat P, aufgebaut aus", dass das Polymerisat ausschließlich aus den Monomeren A und C und gegebenenfalls aus den Monomeren B, D und E aufgebaut ist. Bevorzugt ist das Polymerisat P aufgebaut aus den Monomeren bestehend aus den Monomeren A und C und gegebenenfalls B, D und E.

Die Herstellung des Polymerisats P ist dem Fachmann prinzipiell geläufig und erfolgt beispielsweise durch radikalische Polymerisation der Monomere A bis E nach der Methode der Substanz-, Emulsions-, Lösungs-, Fällungs- oder Suspensionspolymerisation, wobei jedoch die radikalisch initiierte wässrige Emulsionspolymerisation insbesondere bevorzugt ist. Erfindungsgemäß vorteilhaft kann das Polymerisat P daher in einem wässrigen Medium dispergiert werden, d. h. in Form einer wässrigen Polymerisatdispersion eingesetzt werden. Die Durchführung von radikalisch initiierten Emulsionspolymerisationen von Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1 , Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die ethylenisch ungesättigten Monomeren, gegebenenfalls unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741 184, DE-A 19741 187, DE-A 19805122, DE-A 19828183, DE-A 19839199, DE-A 19840586 und 198471 15] herabgesetzt, der Polymerisat-Feststoffgehalt durch Verdünnung oder Aufkonzentration auf einen gewünschten Wert eingestellt oder der wässrigen

Polymerisatdispersion weitere übliche Zusatzstoffe, wie beispielsweise bakterizide, schäum- oder viskositätsmodifizierende Additive zugesetzt. Von dieser allgemeinen Verfahrensweise kann sich die Herstellung einer wässrigen Dispersion des Polymerisats P gemäß der vorliegenden Erfindung lediglich durch den spezifischen Einsatz der vorgenannten Monomeren A bis E unterscheiden. Dabei ist es selbstverständlich, dass zur Herstellung des Polymerisats P im Rahmen der vorliegenden Schrift auch die dem Fachmann geläufigen Saat-, Stufen-, Schuss und Gradienten-Fahrweisen mit umfasst sein sollen.

Selbstverständlich lassen sich wässrige Polymerisatdispersionen prinzipiell auch in Form sogenannter sekundärer Polymerisatdispersionen herstellen (zur prinzipiellen Herstellung von sekundären Polymerisatdispersionen siehe beispielsweise Eckersley et al., Am. Chem. Soc, Div. Polymer Chemistry, 1977, 38(2), Seiten 630, 631 , US-A 3360599, US-A 3238173, US-A 3726824, US-A 3734686 oder US-A 6207756). Die Herstellung der sekundären wässrigen Polymerisatdispersionen erfolgt dabei in der Regel dergestalt, dass die nach der Methode der Substanz oder Lösungspolymerisation hergestellten Polymerisate P in einem geeigneten organischen Lösemittel aufgelöst und unter Ausbildung von wässrigen Polymeren/Lösemittel (Mini)emulsionen in ein wässriges Medium dispergiert werden. Anschließende Lösemittelabtrennung liefert die entsprechenden wässrigen Polymerisatdispersionen.

Erfindungsgemäß handelt es sich um eine (wässrige) Polymerisatdispersion, d. h. das Polymer liegt als dispergierte Phase in Form feinteiliger Partikel in einer kontinuierlichen Phase vor. Die kontinuierliche Phase kann neben Wasser sowie den bei der Herstellung typischerweise eingesetzten Hilfsstoffen wie oberflächenaktiven Substanzen (Emulgatoren), Säuren, Basen, Zerfallsprodukten aus der Polymerisationsreaktion, desodorierende Verbindungen und Molekulargewichtsregler noch geringe Mengen an mit Wasser mischbaren organischen Lösungsmitteln enthalten. Der Anteil dieser genannten Komponenten wird typischerweise 5 Gew.-%, bezogen auf das Gesamtgewicht der Polymerisatdispersion, nicht überschreiten. Der Anteil der jeweiligen einzelnen Komponente wird typischerweise nicht 1,5 Gew.-%, bezogen auf das Gesamtgewicht der Polymerisatdispersion, überschreiten.

Als Polymerisationsinitiatoren kommen alle diejenigen in Betracht, die in der Lage sind, eine radikalische wässrige Polymerisation, insbesondere eine Emulsionspolymerisation, auszulösen. Es kann sich dabei sowohl um Peroxide, z.B. Alkalimetallperoxidisulfate oder $H_2O_2$, als auch um Azoverbindungen handeln.

In der erfindungsgemäßen Polymerisatdispersion können die Abbauprodukte eines Polymerisationsinitiators vorhanden sein. Dies kann beispielsweise nach der Polymerisationsreaktion der Fall sein.

Geeignet sind auch kombinierte Systeme, die aus wenigstens einem organischen Reduktionsmittel und wenigstens einem Peroxid und/oder Hydroperoxid zusammengesetzt sind, z. B. tert.-Butylhydroperoxid und das Natriummetallsalz der Hydroxymethansulfinsäure oder Wasserstoffperoxid und Ascorbinsäure. Ferner eignen sich kombinierte Systeme, die darüber hinaus eine geringe Menge einer im Polymerisationsmedium löslichen Metallverbindung, deren metallische Komponente in mehreren Wertigkeitsstufen auftreten kann, enthalten, z. B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetallbisulfit und anstelle von Wasserstoffperoxid tert.-Butylhydroperoxid oder Alkalimetallperoxidisulfate und/oder Ammoniumperoxidisulfate angewendet werden. Bei den kombinierten Systemen kann es zweckmäßig sein, die Saccharidverbindung S als reduzierende Komponente zu verwenden.

In der Regel beträgt die Menge der eingesetzten radikalischen Initiatorsysteme, bezogen auf die Gesamtmenge der zu polymerisierenden Monomeren A bis E, 0,1 bis 2 Gew.-%.

Besonders bevorzugt werden Ammonium- und/oder Alkalimetallperoxidisulfate für sich oder als Bestandteil kombinierter Systeme als Polymerisationsinitiator eingesetzt. Besonders bevorzugt wird Natriumperoxidisulfat verwendet.

Die Art und Weise, in der der Polymerisationsinitiator im Verlauf der erfindungsgemäßen wässrigen Emulsionspolymerisation dem Polymerisationsgefäß zugegeben wird, ist eher von untergeordneter Bedeutung. Er kann sowohl vollständig in das Polymerisationsgefäß vorgelegt, als auch nach Maßgabe seines Verbrauchs im Verlauf der wässrigen Emulsionspolymerisation kontinuierlich oder stufenweise eingesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Selbstverständlich kann die (radikalische) wässrige Emulsionspolymerisation auch unter erhöhtem oder reduziertem Druck erfolgen.

Geeignete Monomere A sind beispielsweise Ester aus Vinylalkohol und einer $C_1$- bis $C_{10}$-Monocarbonsäure, $C_1$- bis $C_{10}$-Alkylacrylat, $C_5$- bis $C_{10}$-Alkylmethacrylat, $C_5$- bis $C_{10}$- Cycloalkylacrylat und -methacrylat, $C_1$- bis $C_{10}$-Dialkylmaleinat und/oder $C_1$- bis $C_{10}$-Dialkylfumarat, Vinylether von $C_3$- bis $C_{10}$-Alkanolen. Insbesondere vorteilhaft werden als Monomere A Vinylacetat, Methylacrylat, Ethylacrylat, n-Propylacrylat, iso-Propylacrylat, n-Butylacrylat, isoButylacrylat, sec-Butylacrylat, tert.-Butylacrylat, n-Hexylacrylat, 2-Ethylhexylacrylat, n-Hexylmethacrylat, 2-Ethylhexylmethacrylat, Di-n-butylmaleinat, Di-n-butylfumarat verwendet, wobei 2-Ethylhexylacrylat, n-Butylacrylat und Ethylacrylat insbesondere bevorzugt sind. Vorzugsweise wird 2-Ethylhexylacrylat und/oder n-Butylacrylat verwendet.

Vorzugsweise umfasst das Monomer A 2 bis 90 Gew.-% wenigstens eines Esters aus ethylenisch ungesättigten

Monomeren als Monomer A, ganz besonders bevorzugt 30 bis 90 Gew.-% wenigstens eines Esters aus ethylenisch ungesättigten Monomeren A.

Als Monomere B kommen alle ethylenisch ungesättigten Verbindungen in Betracht, welche wenigstens eine Nitrilgruppe aufweisen. Vorteilhaft handelt es sich jedoch bei den Monomeren B um die Nitrile, die sich von den vorgenannten α,β-monoethylenisch ungesättigten, insbesondere $C_3$- bis $C_6$-, bevorzugt $C_3$- oder $C_4$-Mono- oder Dicarbonsäuren ableiten, wie beispielsweise Acrylnitril, Methacrylnitril, Maleinsäuredinitril und/oder Fumarsäuredinitril, wobei Acrylnitril und/oder Methacrylnitril besonders bevorzugt sind.

Vorzugsweise umfasst das Monomer B 2 bis 18 Gew.-% wenigstens eines ethylenisch ungesättigten Carbonsäurenitrils, ganz besonders bevorzugt 7 bis 12 Gew.% wenigstens eines ethylenisch ungesättigten Carbonsäurenitrils.

Unter dem Begriff "Carbonsäurenitril" fallen in der vorliegenden Erfindung nicht nur Komponenten mit einer Nitrilgruppe sondern auch mit zwei Nitrilgruppen, sogenannte Dinitrile.

Als Monomere C kommen alle ethylenisch ungesättigten Verbindungen in Betracht, welche wenigstens eine Säuregruppe (Protonendonator), wie beispielsweise eine Sulfonsäure-, Phosphonsäure oder Carbonsäuregruppe aufweisen, wie beispielsweise Vinylsulfonsäure, Allylsulfonsäure, Styrolsulfonsäure, 2-Acrylamidomethylpropansulfonsäure, Vinylphosphonsäure, Allylphosphonsäure, Styrolphosphonsäure und 2-Acrylamido-2-Methylpropanphosphonsäure. Vorteilhaft handelt es sich jedoch bei den Monomeren C um α,β-monoethylenisch ungesättigte, insbesondere $C_3$- bis $C_6$-, bevorzugt $C_3$- oder $C_4$-Mono- oder Dicarbonsäuren wie beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure. Die Monomeren C umfassen aber auch die Anhydride entsprechender α,β-monoethylenisch ungesättigter Dicarbonsäuren, wie beispielsweise Maleinsäureanhydrid oder 2-Methylmaleinsäureanhydrid. Besonders bevorzugt ist Acrylsäure und/oder Methacrylsäure.

Vorzugsweise umfasst das Monomer C 0,5 bis 4 Gew.-% wenigstens eines säuregruppenhaltigen ethylenisch ungesättigten Monomeren als Monomer C, ganz besonders bevorzugt 2 bis 3 Gew.-% wenigstens eines säuregruppenhaltigen ethylenisch ungesättigten Monomeren.

Als Monomere D kommen Monomeren, die allein oder mit einem Vernetzungsmittel vernetzend wirken in Betracht. Diese Monomere D, die üblicherweise die innere Festigkeit von Verfilmungen wässriger Polymerisatdispersionen erhöhen, weisen normalerweise wenigstens eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-mono-ethylenisch ungesättigten Carbonsäuren sowie deren Ester mit 1 bis 4 C-Atome aufweisenden Alkanolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders vorteilhaft sind dabei die Diester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,3-Butylenglykoldiacrylat, 1,4-Butylenglykoldiacrylat sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat.

Funktionelle Vernetzergruppen sind beispielsweise Keto-, Aldehyd- und/oder Acetoacetoxycarbonylgruppen und die anschließend zugesetzten, formulierten Vernetzungsmittel können ein Polyamin oder Polyhydrazid wie Adipinsäuredihydrazid (ADDH), Oxalsäuredihydrazid, Phthalsäuredihydrazid, Terephthalsäuredihydrazid, Isophorondiamin und 4,7-Dioxadecan-1,1-O-Diamin umfassen oder ein Vernetzungsmittel, das semi-Carbazid oder hydrazinfunktionelle Gruppen trägt. Alternativ könnte das Polymer hydrazidfunktionellen Gruppen tragen und das anschließend formulierte Vernetzungsmittel könnte ketofunktionelle Gruppen enthalten.

Die funktionellen Gruppen können auch Carboxylfunktionen sein und das anschließend formulierte Vernetzungsmittel könnte Aziridin-, Epoxid- oder Carbodiimid-funktionelle Gruppen enthalten, oder die funktionellen Gruppen können silanfunktionelle Gruppen sein und das anschließend formulierte Vernetzungsmittel kann ebenfalls silanfunktionelle Gruppen enthalten.

Die funktionellen Gruppen können auch Ureidogruppen sein und das anschließend zugegebene Vernetzungsmittel ein Polyaldehyd, beispielsweise ein eins bis zehn C-Atome aufweisendes α,ω-Dialdehyd wie Glyoxal, Glutardialdehyd oder Malondialdehyd bzw. deren Acetale und Halbacetale, siehe EP 0789724.

Dabei findet die Vernetzung entweder durch Reaktion miteinander oder durch Zugabe eines weiteren Vernetzungsmittels statt. Bevorzugt findet die Vernetzung erst nach der eigentlichen Filmbildung statt.

Bevorzugt als Monomere D sind Monomere mit silanfunktionellen Gruppen wie Vinyltriethoxysilan, Vinyltriisopropoxysilan, Vinyltrimethoxysilan, Methacryloxypropyltrimethoxysilan oder oligomere Vinylsilane (z.B. Dynasylan 6490, Evonik). Weiterhin bevorzugt als Monomer D sind Monomere mit Acetoacetoxycarbonylgruppen wie Diacetonacrylamid mit anschließend zugesetztem, formuliertem Vernetzungsmittel wie z. B. Adipinsäuredihydrazid (ADDH). Weiterhin bevorzugt sind Acetoacetoxyethylmethacrylat, Glycidylmethacrylat und Ureidomethacrylat. Besonders bevorzugt sind Vinyltriethoxysilan sowie die Kombination aus Diacetonacrylamid mit Adipinsäuredihydrazid.

Dabei ist es wichtig nicht zu viel zusätzliches Vernetzungsmittel einzusetzen, da dies zu Restvernetzungsmittel-Rückständen führen kann. Zu wenig Vernetzungsmittel andererseits kann zu einer löslichen Beschichtung führen. Dabei ist es wichtig, nicht zu viel zusätzliches Vernetzungsmittel einzusetzen, da dies zu Restvernetzungsmittel-Rückständen führen kann. Zu wenig Vernetzungsmittel andererseits kann zu einer löslichen Beschichtung führen.

Vorzugsweise umfasst das Monomer D 0,01 bis 5 Gew.-% wenigstens eines Monomeren, das allein oder mit einem Vernetzungsmittel vernetzend wirkt, ganz besonders bevorzugt 0,05 bis 3 Gew.-% wenigstens eines Monomeren, das allein oder mit einem Vernetzungsmittel vernetzend wirkt.

Als Monomere E kommen alle ethylenisch ungesättigten Monomere in Betracht, deren Homopolymerisat eine Glasübergangstemperatur $\geq$ 50 °C aufweisen und welche sich von den Monomeren A bis D unterscheiden. Geeignete Monomere E sind Styrol, $\alpha$-Methylstyrol, o-oder p-Vinyltoluol, p-Acetoxystyrol, p-Bromstyrol, p-tertButylstyrol, o-, m-oder p-Chlorstyrol, Methylmethacrylat, tert.-Butylmethacrylat, Ethylmethacrylat, Isobutylmethacrylat, Cyclohexylmethacrylat, tert.-Butylvinylether oder Cyclohexylvinylether.

Vorzugsweise umfasst das Monomer E 1 bis 10 Gew.-% eines ethylenisch ungesättigten Monomers.

Die Summe der Monomere A bis E in dem Polymerisat P ergibt 100 Gew.-%. Mit anderen Worten ergeben die entsprechenden Anteile der Monomere A bis E in der Summe 100 Gew.-%, um das Polymerisat P zu bilden.

Im Rahmen dieser Schrift werden unter einer Saccharidverbindung S Monosaccharide, Oligosaccharide, Polysaccharide, Zuckeralkohole sowie Substitutionsprodukte und Derivate der vorgenannten Verbindungen verstanden. Unter der Saccharidverbindung S kann auch "verzuckerte Stärke" oder "Saccharid" im Sinne der vorliegenden Erfindung verstanden werden. Dabei handelt es sich bei den Monosacchariden um organische Verbindungen der allgemeinen Formel $C_nH_{2n}O_n$, wobei n für eine ganze Zahl 5, 6, 7, 8 oder 9 steht. Diese Monosaccharide werden auch als Pentosen, Hexosen, Heptosen, Octosen oder Nonosen bezeichnet, wobei sich diese Verbindungen in die entsprechenden Aldosen, welche eine Aldehydgruppe bzw. Ketosen, welche eine Ketogruppe aufweisen, untergliedern lassen. Entsprechend umfassen die Monosaccharide Aldooder Ketopentosen, -hexosen, -heptosen, -octosen oder -nonosen. Erfindungsgemäß bevorzugte Monosaccharidverbindungen sind die auch in der Natur vorkommenden Pentosen und Hexosen, wobei Glucose, Mannose, Galactose und/oder Xylose insbesondere bevorzugt sind. Selbstverständlich sind erfindungsgemäß auch alle Stereoisomeren aller vorgenannten Monosaccharide mit umfasst.

Verbindungen, welche aus wenigstens zwei aber maximal zehn Monosaccharidstruktureinheiten über glykosidische Verbindungen aufgebaut sind, werden als Oligosaccharide bezeichnet. Bevorzugte Oligosaccharide sind die Disaccharide, worunter die Lactose, Maltose und/oder Saccharose besonders bevorzugt sind. Selbstverständlich sollen erfindungsgemäß auch alle Stereoisomeren aller vorgenannten Oligosaccharide mit umfasst sein.

Saccharidverbindungen, welche aus mehr als zehn Monosaccharidstruktureinheiten aufgebaut sind, werden im Rahmen dieser Schrift als Polysaccharidverbindungen bezeichnet. Dabei können die Polysaccharidverbindungen aus den Strukturelementen eines Monosaccharids (sogenannte Homoglycane) oder den Strukturelementen von zwei oder mehreren verschiedenen Monosacchariden (sogenannte Heteroglycane) aufgebaut sein. Erfindungsgemäß bevorzugt werden Homoglycane eingesetzt. Unter den Homoglycanen sind die Stärken, welche aus [alpha]-D-Glucoseeinheiten aufgebaut sind, insbesondere bevorzugt. Die Stärken bestehen aus den Polysacchariden Amylose (D-Glucoseeinheiten, welche $\alpha$-1,4-glycosidisch miteinander verbunden sind) und Amylopektin (D- Glucoseeinheiten, welche $\alpha$-1,4- und zusätzlich zu ca. 4 % $\alpha$-1,6-glycosidisch miteinander verbunden sind). Üblicherweise enthält natürlich vorkommende Stärke ca. 20 bis 30 Gew.-% Amylose und ca. 70 bis 80 Gew.-% Amylopektin. Durch Züchtung und variierend nach Pflanzenart kann das Verhältnis zwischen Amylose und Amylopektin aber verändert sein.

Bei den Zuckeralkoholen handelt es sich um die Hydrierungsprodukte der vorgenannten Aldooder Ketopentosen, -hexosen, -heptosen, -octosen oder -nonosen, welche die allgemeine For mel $C_nH_{2n}$+$O_n$, wobei n für eine ganze Zahl 5, 6, 7, 8 oder 9 steht, aufweisen. Bevorzugte Zuckeralkohole sind Mannit, Lactit, Sorbit und/oder Xylit. Selbstverständlich sollen erfindungsgemäß auch alle Stereoisomeren aller vorgenannten Zuckeralkohole mit umfasst sein.

Selbstverständlich umfasst der Begriff Saccharidverbindung S auch die Substitutionsprodukte und Derivate der vorgenannten Mono-, Oligo und Polysaccharidverbindungen sowie der Zuckeralkohole. Dabei versteht man unter den Substitutionsprodukten einer Saccharidverbindung S solche, bei denen wenigstens eine Hydroxygruppe der Saccharidverbindung S unter Aufrechterhaltung der Saccharidstruktur funktionalisiert wurde, beispielsweise durch Veresterung, Veretherung, Oxidation etc.

Durch Hydrolyse in wässriger Phase erhältliche Stärkeabbauprodukte, sogenannte chemisch modifizierte abgebaute Stärke, eines gewichtsmittleren Molekulargewichtes von 2500 bis 25000 werden im Unterschied zu den Röstdextrinen üblicherweise als verzuckerte Stärken bezeichnet und sind als solche im Handel erhältlich (z. B. Produkte der Cerestar Deutschland GmbH, D-1150 Krefeld 12).

Derartige Saccharide sind von den so genannten Röstdextrinen u. a. dadurch chemisch verschieden, dass bei einem hydrolytischen Abbau in wässrigem Medium (üblicherweise Suspensionen oder Lösungen), der in der Regel bei Feststoffgehalten von 10 bis 30 Gew.-% sowie vorzugsweise säure- oder enzymkatalysiert vorgenommen wird, die Möglichkeit der Rekombination und Verzweigung im Wesentlichen nicht gegeben ist, was sich nicht zuletzt auch in anderen Molekulargewichtsverteilungen äußert.

Die Herstellung der Saccharidverbindung S (verzuckerte Stärke) ist allgemein bekannt und u. a. in Günther Tegge, Stärke und Stärkederivate, Behr's Verlag, Hamburg 1984, S. 173 und S. 220 ff sowie in der EP-A 441 197 beschrieben. Vorzugsweise handelt es sich bei der erfindungsgemäß zu verwendenden Saccharidverbindung S um eine, deren gewichtsmittleres Molekulargewicht $M_w$ im Bereich von 4000 bis 16000, besonders bevorzugt im Bereich von 6500 bis 13000 liegt.

Die erfindungsgemäß zu verwendende Saccharidverbindung S ist normalerweise bei Raumtemperatur in Wasser vollständig löslich, wobei die Löslichkeitsgrenze in der Regel oberhalb von 50 Gew.-% liegt, was sich für die Herstellung der erfindungsgemäßen wässrigen Dispersionen als besonders vorteilhaft erweist.

Es hat sich ferner als günstig erwiesen, wenn die erfindungsgemäß zu verwendenden Saccharide S eine Uneinheitlichkeit U (definiert als Verhältnis von gewichtsmittlerem Molekulargewicht $M_w$ zu zahlenmittlerem Molekulargewicht $M_n$; U charakterisiert die Molekulargewichtsverteilung) im Bereich von 6 bis 12 aufweisen. Besonders vorteilhaft beträgt U 7 bis 11 und ganz besonders günstig ist ein U von 8 bis 10.

Ferner ist es von Vorteil, wenn der Gewichtsanteil der erfindungsgemäß zu verwendenden Saccharidverbindung S, der ein Molekulargewicht unterhalb von 1000 aufweist, wenigstens 10 Gew.-%, jedoch nicht mehr als 70 Gew.-% beträgt. Besonders bevorzugt liegt dieser Gewichtsanteil im Bereich von 20 bis 40 Gew.-%.

Als Ausgangsstärken zur Herstellung der erfindungsgemäß zu verwendenden Saccharidverbindung S sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet.

Ein wesentlicher Vorzug der Saccharidverbindung S ist, dass es hinsichtlich ihrer Anwendung, abgesehen von der in einfachster Weise durchzuführenden partiellen Hydrolyse der Ausgangsstärke zu ihrer Herstellung, keiner weiteren chemischen Modifizierung bedarf. Selbstverständlich können sie aber auch in z. B. durch Veretherung oder Veresterung chemisch modifizierter Form erfindungsgemäß angewendet werden. Diese chemische Modifizierung kann auch bereits an der Ausgangsstärke vor deren Abbau durchgeführt worden sein. Veresterungen sind sowohl mit anorganischen als auch mit organischen Säuren, deren Anhydriden oder Chloriden möglich. Von besonderem Interesse sind phosphatierte und acetylierte abgebaute Stärken. Die gängigste Methode zur Veretherung ist die Behandlung mit organischen Halogenverbindungen, Epoxiden oder Sulfaten in wässriger alkalischer Lösung. Besonders geeignete Ether sind Alkylether, Hydroxyalkylether, Carboxyalkylether und Allylether. Ferner kommen auch Umsetzungsprodukte mit 2,3-Epoxipropyltrimethylammoniumchlorid in Betracht.

Die Saccharidverbindung S weist in der Regel ein gewichtsmittleres Molekulargewicht im Bereich > 1000 und < 5000000 g/mol, vorteilhaft im Bereich > 1000 und < 500000 g/mol, bevorzugt im Bereich > 3000 und < 50000 g/mol und insbesondere bevorzugt im Bereich > 5000 und < 25000 g/mol auf. Dabei erfolgt die Bestimmung des gewichtsmittleren Molekulargewichts mittels der dem Fachmann geläufigen Gelpermeationschromatographie mit definierten Standards.

Bevorzugt ist, wenn die Saccharidverbindung S eine Löslichkeit von > 10 g, vorteilhaft > 50 g und insbesondere vorteilhaft > 100 g pro Liter entionisiertem Wasser bei 20 °C und Atmosphärendruck aufweist. Es sind jedoch auch Ausführungsformen mit umfasst, deren Saccharidverbindung S eine Löslichkeit < 10 g pro Liter entionisiertem Wasser bei 20 °C und Atmosphärendruck aufweist. Abhängig von der Menge dieser eingesetzten Saccharidverbindungen S, können diese dann auch in Form ihrer wässrigen Suspension vorliegen. Wird eine Saccharidverbindung S in Art und Menge so eingesetzt, dass sie in wässriger Suspension vorliegen, so ist es vorteilhaft, wenn die in wässrigem Medium suspendierten Partikel der Saccharidverbindung S einen mittleren Teilchendurchmesser $\leq 5$ $\mu$m, bevorzugt $\leq 3$ $\mu$m und insbesondere bevorzugt $\leq 1$ $\mu$m aufweisen. Die Bestimmung der mittleren Teilchendurchmesser erfolgt über die Methode der quasielastischen Lichtstreuung (ISO-Norm 13 321).

Die Gesamtmenge der Saccharidverbindung S kann dem wässrigen Polymerisationsmedium (Monomere A bis E, Wasser und gegebenenfalls Initiator) vor, während oder nach der Emulsionspolymerisation der Monomeren A bis E der wässrigen Dispersion des Polymerisats P zugegeben werden. Selbstverständlich ist es auch möglich, lediglich eine Teilmenge der Saccharidverbindung S dem wässrigen Polymerisationsmedium vor oder während der Emulsionspolymerisation der Monomeren A bis E und die verbleibende Restmenge nach Beendigung der Emulsionspolymerisation der wässrigen Dispersion des Polymerisats P zuzugeben. Wird die eine Teil- oder die Gesamtmenge der Saccharidverbindung S vor, während oder nach der Emulsionspolymerisation der Monomeren A bis E zugegeben, kann diese in der Regel die Funktion des Schutzkolloids übernehmen, wodurch die Menge anderer Schutzkolloide und/oder Emulgatoren reduziert bzw. auf diese gegebenenfalls vollständig verzichtet werden kann.

Die Polymerisatdispersion umfasst 10 bis 60 Gew.-Teile, bezogen auf 100 Gew.-Teile Polymerisat P, wenigstens einer Saccharidverbindung S. Daher beträgt die Menge der Saccharidverbindung S 10 bis 60 Gew.-Teile pro 100 Gew.-Teile Polymerisat P.

Bevorzugt sind in der ersten Phase 20 bis 55 Gew.-Teile Saccharidverbindung S, bezogen auf 100 Gew.-Teile Polymerisat P, enthalten, ganz besonders bevorzugt 30 bis 45 Gew.-Teile, bezogen auf 100 Gew.-Teile Polymerisat P.

Die erfindungsgemäße Polymerisatdispersion umfasst mindestens eine erste Phase, enthaltend gegebenenfalls mindestens eine Polymersaat. Bevorzugt kann die Polymersaat in einer Menge von 0 bis 3 Gew.-Teilen, bezogen

auf 100 Gew.-Teile Polymerisat P, vorkommen, insbesondere 0,01 bis 3 Gew.-Teile, bezogen auf 100 Gew.-Teile Polymerisat P.

Die erfindungsgemäße Polymerisatdispersion umfasst eine zweite Phase enthaltend c) mindestens ein Lösungsmittel. Bevorzugte Lösungsmittel sind protische, polare Lösungsmittel. Insbesondere bevorzugt sind Alkohole und Wasser. Ganz besonders bevorzugt ist Wasser. Vorzugsweise entspricht das Lösungsmittel dem Dispersionsmedium.

Bevorzugt wird eine erfindungsgemäße Polymerisatdispersion, bei der die Polymerisatdispersion eine wässrige Polymerisatdispersion ist. Dabei wird unter einer wässrigen Polymerisatdispersion eine Polymerisatdispersion verstanden, bei der das Dispersionsmedium zu mindestens aus 50 Gew.-Teilen Wasser, besonders bevorzugt 90 Gew.-Teile Wasser und insbesondere bevorzugt zu mehr als 99 Gew.-Teilen Wasser besteht.

Vorzugsweise umfasst die erfindungsgemäße Polymerisatdispersion mindestens einen Emulgator. Vorteilhafterweise umfasst die erfindungsgemäße Polymerisatdispersion 0,1 bis 10 Gew.-Teile Emulgator, bezogen auf 100 Gew.-Teile Polymerisat P, insbesondere 0,1 bis 5 Gew.-Teile Emulgator. Dabei unterscheidet sich der Emulgator von der Saccharidverbindung S sowie einem eventuell eingesetzten, sich von der Saccharidverbindung S unterscheidenden Schutzkolloid.

Jedweder für Reinigungszwecke nützlicher anionischer Emulgator kann geeignet sein. Dieser kann Salze (einschließlich zum Beispiel Natrium-, Kalium, Ammonium- und substituierten Ammonium-Salzen, wie Mono-, Di- und Triethanolaminsalzen) der anionischen Sulfat-, Sulfonat-, Carboxylat-, Succinat- und Sarcosinat-Emulgatoren oder Mischungen davon umfassen.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

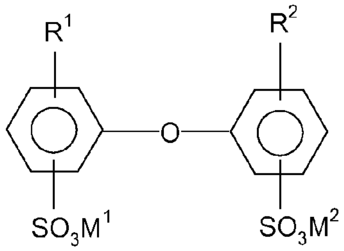

(I) ,

worin $R^1$ und $R^2$ H-Atome oder $C_4$- bis $C_{24}$-Alkyl bedeuten und nicht gleichzeitig H-Atome sind, und M1 und M2 Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. M1 und M2 sind bevorzugt Natrium, Kalium oder Ammonium, wobei Natrium besonders bevorzugt ist. Besonders vorteilhaft sind Verbindungen (I), in denen M1 und M2 Natrium, $R^1$ ein verzweigter Alkylrest mit 12 C-Atomen und $R^2$ ein H Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Andere geeignete anionische Emulgatoren schließen die Isethionate, wie Acylisethionate, N-Acyltaurate, Fettsäureamide von Methyltaurid, Alkylsuccinate und Sulfosuccinate, Monoester von Sulfosuccinat (speziell gesättigte und ungesättigte $C_{12}$-$C_{18}$-Monoester), Diester von Sulfosuccinat (speziell gesättigte und ungesättigte $C_6$-$C_{14}$-Diester) und N-Acylsarcosinate ein. Weitere geeignete anionische Sulfat-Emulgatoren schließen die linearen und verzweigten, primären und sekundären Alkylsulfate, Fettoleoylglycerolsulfate, $C_5$-$C_{17}$-Acyl-N-($C_1$-$C_4$-alkyl)- und - N-($C_1$-$C_2$-Hydroxyalkyl)glucaminsulfate, und Sulfate von Alkylpolysacchariden, wie Sulfate von Alkylpolyglucosid, ein.

Weitere geeignete anionische Sulfonat-Emulgatoren schließen die Salze von linearen $C_2$-$C_{22}$-Alkylbenzolsulfonaten, insbesondere $C_3$-$C_{10}$-Alkylbenzolsulfonaten, Alkylestersulfonaten, primären oder sekundären $C_2$-$C_{22}$-Alkansulfonaten, insbesondere $C_2$-$C_{10}$-Alkansulfonaten, $C_6$-$C_{24}$-Olefinsulfonaten, sulfonierten Polycarbonsäuren, Alkylglycerolsulfonaten, Fettacylglycerolsulfonaten, Fettoleylglycerolsulfonaten und jegliche Mischungen hiervon ein.

Bevorzugt sind in der vorliegenden Erfindung Emulgatoren ausgewählt aus Alkylsulfat- und/oder Alkylbenzolsulfonat-Emulgatoren der Formeln II bzw. III: $R^5OSO_3^-M^+$ (II) $R^6SO_3^-M^+$ (III), worin $R^5$ eine lineare oder verzweigte Alkyl- oder Alkenyleinheit mit 2 bis 22 Kohlenstoffatomen ist, vorzugsweise $C_3$- bis $C_{10}$-Alkyl, oder wie es analog in sekundären Alkylsulfaten gefunden wird, $R^6$ $C_2$-$C_{16}$-Alkylbenzol, bevorzugt $C_3$-$C_{10}$-Alkylbenzol ist. $M^+$ und $M^+$ können unabhängig variieren und aus Alkalimetallen, Erdalkalimetallen, Alkanolammonium und Ammonium gewählt werden.

Ganz besonders bevorzugt werden in der erfindungsgemäßen Polymerisatdispersion und/oder der erfindungsgemäßen Formulierung Emulgatoren ausgewählt aus der Gruppe bestehend aus Sulfosuccinaten, Monoester von Sulfosuccinat, insbesondere gesättigte und ungesättigte $C_{12}$-$C_{18}$-Monoester, Diester von Sulfosuccinat, insbesondere gesättigte und ungesättigte $C_6$-$C_{14}$-Diester, Emulgatoren der allgemeinen Formel (I)

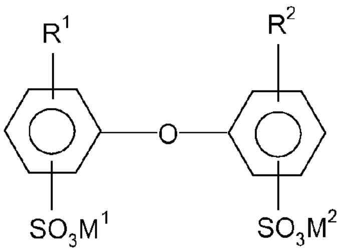

(I) ,

worin $R^1$ und $R^2$ H-Atome oder $C_4$- bis $C_{24}$-Alkyl bedeuten und nicht gleichzeitig H-Atome sind, und M1 und M2 Alkalimetallionen und/oder Ammoniumionen sein können, und die Salze von linearen $C_3$-$C_{10}$-Alkylbenzolsulfonaten, primären oder sekundären $C_2$-$C_{10}$-Alkansulfonaten.

Gebräuchliche nichtionische Emulgatoren sind z. B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: Cs bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken (C10-Oxoalkoholethoxylate, EO-Grad: 3 bis 11) und die Lutensol® TOMarken ($C_{13}$-Oxoalkoholethoxylate, EO-Grad: 3 bis 20) der Fa. BASF SE.

Geeignete kationenaktive Emulgatoren sind in der Regel einen $C_6$- bis $C_{18}$-Alkyl-, -Alkylaryl oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,Ntrimethylammoniumsulfat, N-Octyl-N,N,N-trimethlyammoniumsulfat, N,N-Distearyl-N,Ndimethylammoniumsulfat sowie das Gemini-Tensid N,N'-(Lauryldimethyl) ethylendiamindisulfat, ethoxyliertes Talgfettalkyl-N-methylammoniumsulfat und ethoxyliertes Oleylamin (beispielsweise Uniperol® AC der Fa. BASF SE, ca. 11 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Bevorzugt ist eine erfindungsgemäße Polymerisatdispersion, bei der das Monomer B Acrylnitril und/oder Methacrylnitril ist.

Bevorzugt ist eine erfindungsgemäße Polymerisatdispersion, bei der das Polymerisat P eine Glasübergangstemperatur Tg von $\leq$ -10 °C aufweist. Besonders bevorzugt ist ein Polymerisat P, das eine Glasübergangstemperatur Tg von $\leq$ -15 °C aufweist.

Durch gezielte Variationen von Art und Menge der Monomeren ist es dem Fachmann erfindungsgemäß möglich, Polymerdispersionen, insbesondere Polymerisate P, herzustellen, deren Polymere eine Glasübergangstemperatur im gewünschten Bereich aufweisen. Unter Glasübergangstemperatur Tg wird im Rahmen dieser Schrift die midpoint temperature nach ASTM D 3418-82 verstanden, ermittelt durch Differenzialthermoanalyse (DSC) [vergl. Auch Ullman's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher 25 an sich bekannter Weise experimentell ermittelt werden) und beispielsweise in J. Brandrup, E.H. Immergut, Polymer Handbook Ist Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Die Polymerisate P, insbesondere durch Emulsionspolymerisation zugänglich, können prinzipiell Glasübergangstemperaturen Tg im Bereich von $\geq$ -70 bis $\leq$ -10 °C aufweisen, insbesondere von $\geq$ -70 bis $\leq$ -15 °C.

Bevorzugt ist eine erfindungsgemäße Polymerisatdispersion enthaltend 45 bis 400 Gew.-% Lösungsmittel, bezogen auf die 100 Gew.-% Polymerisat P. Besonders bevorzugt ist eine Polymerisatdispersion enthaltend 45 bis 200 Gew.-% Lösungsmittel, insbesondere bevorzugt 70 bis 160 Gew.-% Lösungsmittel, bezogen auf die 100 Gew.-% Polymerisat P.

Bevorzugt ist eine erfindungsgemäße Polymerisatdispersion bei der die Saccharidverbindung S ausgewählt ist aus der Gruppe bestehend aus Stärke, Cellulose, Guaran, Xanthan, Alginat, Pectin, Chitosan, Gummi Arabicum, Gellan oder Mischungen daraus.

Bevorzugt wird in der erfindungsgemäßen Polymerisatdispersion als Saccharidverbindung S eine Stärke, ein Stärkederivat und/oder deren Substitutionsprodukte eingesetzt.

Bevorzugt weist in der erfindungsgemäßen Polymerisatdispersion die Saccharidverbindung S ein DE-Wert (Dextrose Äquivalent-Wert) in einem Bereich von 1 bis 40 auf, besonders bevorzugt in einem Bereich von 16 bis 34 und ganz besonders bevorzugt einen Wert von 16 bis 20 auf.

Der DE-Wert charakterisiert das Reduktionsvermögen (bezogen auf das Reduktionsvermögen von wasserfreier Dextrose) und wird nach DIN 10308, Ausgabe 5,71, des Normenausschusses Lebensmittel und landwirtschaftliche Produkte, bestimmt (vergleiche auch Günther Teggel, Stärke und Stärkederivate, Behr's Verlag Hamburg, 1984, S. 305).

Bevorzugt ist in der erfindungsgemäßen Polymerisatdispersion die Saccharidverbindung S Maltodextrin. Bei Maltodextrin kann es sich um eine Maltodextrinlösung oder um sprühgetrocknetes Maltodextrin handeln.

Ein weiterer Gegenstand der Erfindung ist ein Polymerisatpulver, erhältlich durch Trocknen der erfindungsgemäßen Polymerisatdispersion. Entsprechende Trocknungsschritte sind dem Fachmann bekannt, z.B. durch Sprühtrocknung.

Bevorzugt ist in der erfindungsgemäßen Polymerisatdispersion die Saccharidverbindung S ein Glucosesirup und/oder eine chemisch modifizierte abgebaute Stärke.

Die im Rahmen der vorliegenden Erfindung bevorzugten Maltodextrine weisen DE-Werte im Bereich von 3 bis 20 und gewichtsmittlere Molekulargewichte von 15000 bis 30000 g/mol auf. Der im Rahmen der vorliegenden Erfindung ebenfalls bevorzugte Glucosesirup weist DE-Werte von 20 bis 30 und gewichtsmittlere Molekulargewichte im Bereich von 3000 bis 9000 g/mol auf. Herstellungsbedingt fallen diese Produkte in Form von wässriger Lösung an und werden daher in der Regel auch als solche in den Handel gebracht. Geeignete Lösungen von Maltodextrin weisen Feststoffgehalte von 50 bis 70 Gew.-%, geeignete Lösungen von Glucosesirup Feststoffgehalte von 70 bis 95 Gew.-% auf. Insbesondere Maltodextrine sind jedoch auch in sprühgetrockneter Form als Pulver erhältlich. Erfindungsgemäß bevorzugt sind auch chemisch modifizierte abgebaute Stärken, welche DE-Werte von 1 bis 3 und gewichtsmittlere Molekulargewichte $M_w$ von 100000 bis 1000000 g/mol aufweisen und üblicherweise als Feststoff erhältlich sind.

Vorzugsweise können in der erfindungsgemäßen Polymerisatdispersion weitere Hilfsstoffe und/oder Additive vorhanden sein. Vorzugsweise können Ascorbinsäure, Natriumhydroxid, tert.-Butylhydroperoxid, Natriumacetonbisulfit, Ammoniak, Entschäumer und/oder Biozide in der Polymerisatdispersion enthalten sein, insbesondere in für den Fachmann geläufigen Mengen für wässrige Polymerisatdispersionen. Vorzugsweise überschreitet der Anteil dieser Komponenten nicht mehr als 5 Gew.-%, bezogen auf das Gesamtgewicht der Polymerisatdispersion.

Ein weiterer Gegenstand der vorliegenden Erfindung ist ein Verfahren zur Herstellung einer erfindungsgemäßen Polymerisatdispersion umfassend die Schritte:

I.) Bereitstellen mindestens einer ersten Phase, enthaltend
wenigstens ein Polymerisat P, aufgebaut aus
1 bis 99,9 Gew.-% wenigstens eines Esters aus ethylenisch ungesättigten Monomeren, als Monomer A,
0 bis 20 Gew.-% wenigstens eines ethylenisch ungesättigten Carbonsäurenitrils, als Monomer B,
0,1 bis 5 Gew.-% wenigstens eines säuregruppenhaltigen ethylenisch ungesättigten Monomeren, als Monomer C,
0 bis 5 Gew.-% wenigstens eines Monomeren, das allein oder mit einem Vernetzungsmittel vernetzend wirkt und welches verschieden ist von den Monomeren A bis C, als Monomer D,
0 bis 20 Gew.-% wenigstens eines ethylenisch ungesättigten Monomeren, dessen Homopolymerisat eine Glasübergangstemperatur $\geq$ 50 °C aufweist und welches sich von den Monomeren A bis D unterscheidet, als Monomer E,
wobei die Summe der Gesamtmenge der Monomere A bis E 100 Gew.-% ergibt,

a1) gegebenenfalls mindestens eine Polymersaat,

b) 10 bis 60 Gew.-Teile, bezogen auf 100 Gew.-Teile Polymerisat P, wenigstens einer Saccharidverbindung S und

II.) Bereitstellen einer zweiten Phase, enthaltend

c) mindestens ein Lösungsmittel.

Bevorzugte eingesetzte Monomere, Lösungsmittel oder Saccharidverbindungen S sind vorstehend genannt.

Besonders bevorzugt wird ein Verfahren zur Herstellung der erfindungsgemäßen Polymerisatdispersion umfassend die Schritte:

I.) Bereitstellen mindestens einer ersten Phase, enthaltend
wenigstens ein Polymerisat P, aufgebaut aus
1 bis 92,8 Gew.-% wenigstens eines Esters aus ethylenisch ungesättigten Monomeren, als Monomer A,
7 bis 20 Gew.-% wenigstens eines ethylenisch ungesättigten Carbonsäurenitrils, als Monomer B,
0,1 bis 5 Gew.-% wenigstens eines säuregruppenhaltigen ethylenisch ungesättigten Monomeren, als Monomer C,
0 bis 5 Gew.-% wenigstens eines Monomeren, das allein oder mit einem Vernetzungsmittel vernetzend wirkt und welches verschieden ist von den Monomeren A bis C, als Monomer D,
0,1 bis 20 Gew.-% wenigstens eines ethylenisch ungesättigten Monomeren, dessen Homopolymerisat eine Glasübergangstemperatur ≥ 50 °C aufweist und welches sich von den Monomeren A bis D unterscheidet, als Monomer E,
wobei die Summe der Gesamtmenge der Monomere A bis E 100 Gew.-% ergibt,

a1) gegebenenfalls mindestens eine Polymersaat,

b) 10 bis 60 Gew.-Teile, bezogen auf 100 Gew.-Teile Polymerisat P, wenigstens einer Saccharidverbindung S und

II.) Bereitstellen einer zweiten Phase, enthaltend

c) mindestens ein Lösungsmittel.

Das Bereitstellen der ersten und der zweiten Phase umfasst die Bildung einer Dispersion.

Zur Herstellung des Polymerisats P in Form ihrer wässrigen Polymerisatdispersion kann die Gesamtmenge der Monomeren A bis E im wässrigen Reaktionsmedium vor Initiierung der Polymerisationsreaktion vorgelegt werden.

Es ist aber auch möglich, gegebenenfalls lediglich eine Teilmenge der Monomeren A bis E und gegebenenfalls die Polymersaat im wässrigen Reaktionsmedium vor Initiierung der Polymerisationsreaktion vorzulegen und dann nach Initiierung der Polymerisation unter Polymerisationsbedingungen während der radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben (semikontinuierliches Verfahren). Dabei kann die Dosierung der Monomeren A bis E als separate Einzelströme, als inhomogene oder homogene (Teil)gemische oder als eine oder mehrere Monomerenemulsion(en) gleichzeitig oder sequentiell erfolgen. Mit Vorteil werden die Monomeren A bis E in Form eines Monomerengemisches, insbesondere in Form einer wässrigen Monomerenemulsion dosiert.

Zur Herstellung der erfindungsgemäß eingesetzten Polymerisate P in Form ihrer wässrigen Polymerisatdispersion können Dispergierhilfsmittel mitverwendet werden, die sowohl die Monomerentröpfchen, wie auch die gebildeten Polymerisat-Teilchen im wässrigen Medium dispers verteilt halten und so die Stabilität der erzeugten wässrigen Polymerisatdispersion gewährleisten.

Als Dispergierhilfsmittel kommen sowohl die zur Durchführung von radikalischen wässrigen Emulsionspolymerisationen üblicherweise eingesetzten Schutzkolloide als auch Emulgatoren in Betracht. Geeignete Emulgatoren wurden bereits vorstehend genannt.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch NVinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, 15 Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Als Dispergierhilfsmittel werden jedoch bevorzugt Emulgatoren eingesetzt.

Die als Dispergierhilfsmittel bevorzugt eingesetzten Emulgatoren werden vorteilhaft in einer Gesamtmenge $\geq$ 0,005 und $\leq$ 10 Gew.-%, vorzugsweise $\geq$ 0,01 und $\leq$ 5 Gew.-%, insbesondere $\geq$ 0,5 und $\leq$ 4 Gew.-%, jeweils bezogen auf die Gesamtmenge der Monomeren A bis E (Gesamtmonomerenmenge), eingesetzt.

Die Gesamtmenge der als Dispergierhilfsmittel zusätzlich oder statt der Emulgatoren eingesetzten Schutzkolloide beträgt oft $\geq$ 10,005 und $\leq$ 70 Gew.-% und häufig $\geq$ 10,01 und $\leq$ 65 Gew.-%, jeweils bezogen die Gesamtmonomerenmenge A bis E. Mit der Gesamtmenge der Schutzkolloide ist im Sinne der vorliegenden Erfindung die Summe aus der Saccharidverbindung S und einem eventuell eingesetzten, von der Saccharidverbindung S unterschiedlichen Schutzkolloid, jedoch nicht die davon unterschiedlichen, vorstehend genannten Emulgatoren, gemeint.

Zur Herstellung der erfindungsgemäß eingesetzten Polymerisate P in Form ihrer wässrigen Polymerisatdispersion kann die Gesamtmenge des Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge des Dispergierhilfsmittels kontinuierlich oder diskontinuierlich zuzugeben. Es ist ebenfalls möglich, die Gesamtmenge oder eine Teilmenge des Dispergierhilfsmittels nach Beendigung der Polymerisation zuzugeben. Bevorzugt erfolgt die Zugabe der Haupt- oder der Gesamtmenge Dispergierhilfsmittel in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Zur Herstellung der erfindungsgemäß eingesetzten Polymerisate P in Form ihrer wässrigen Polymerisatdispersion kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und da nach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist und dabei immer genügend Startradikale zur Verfügung stehen, um die Polymerisationsreaktion zu initiieren und aufrechtzuerhalten.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 70 bis 100 °C angewendet. Die radikalische wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A bis E mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 atm unter Sauerstoffausschluss, insbesondere unter Inertgasatmosphäre, wie beispielsweise unter Stickstoff oder Argon durchgeführt.

In dem erfindungsgemäßen Verfahren können Molekulargewichtsregler eingesetzt werden. Hierdurch kann durch eine Kettenabbruchsreaktion die Molmasse des (Emulsions)Polymerisats verringert werden. Die Regler werden dabei an das Polymer gebunden, im Allgemeinen an das Kettenende.

Vorzugsweise beträgt die Menge der Regler 0,01 bis 4 Gew.-Teile, besonders bevorzugt 0,05 bis 2 Gew.-Teile bezogen auf 100 Gew.-Teile des Polymerisats P. Geeignete Regler sind z. B. Verbindungen mit einer Thiolgruppe, wie tert.-Butylmercaptan, Thioglycolsäurealkylester, Mercaptoethanol, Mercaptopropionsäure, 2-Ethylhexylthioglykolat, Mercaptopropyltrimethoxysilan, n- oder tert.-Dodecylmercaptan. Bei den Reglern handelt es sich im Allgemeinen um niedermolekulare Verbindungen mit einem Molgewicht < 2000, insbesondere < 1000 g/mol.

Besonders bevorzugt als Molekulargewichtsregler sind 2-Ethylhexylthioglykolat und/oder tert.-Dodecylmercaptan.

Die radikalisch initiierte wässrige Emulsionspolymerisation kann auch in Anwesenheit einer Polymersaat, beispielsweise in Anwesenheit von 0,01 bis 3 Gew.-Teilen, bevorzugt von 0,02 bis 2 Gew.-Teilen und ganz besonders bevorzugt von 0,02 bis 1,0 Gew.-Teilen einer Polymersaat, jeweils bezogen auf 100 Gew.-Teile Polymerisat P, durchgeführt werden.

Eine Polymersaat wird insbesondere dann eingesetzt, wenn die Teilchengröße der mittels einer radikalisch wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel eine enge Teilchengrößenverteilung und gewichtsmittlere Durchmesser Dw ≤ 100 nm, häufig ≥ 5 nm bis ≤ 50 nm und oft ≥ 15 nm bis ≤ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere Dw50-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser Dw50 und zahlenmittleren Teilchendurchmesser DN50 [Dw50/DN50] < 2,0, bevorzugt < 1,5 und insbesondere bevorzugt < 1,2 oder < 1,1 ist.

Üblicherweise wird die Polymersaat in Form einer wässrigen Polymerisatdispersion eingesetzt. Die vorgenannten Mengenangaben beziehen sich dabei auf den Polymerisat-Feststoff-Anteil der wässrigen Polymersaatdispersion.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat

verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylat-Polymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A bis E zuzugeben. Falls erforderlich, kann aber auch die Gesamtpolymersaatmenge im Verlauf der Polymerisation kontinuierlich oder als Schuss zuzugeben werden. Vorzugsweise wird die Gesamtmenge an Fremdpolymersaat vor Initiierung der Polymerisationsreaktion im Polymerisationsgefäß vorgelegt.

Vorzugsweise ist die durch hydrodynamische Fraktionierung bestimmte arithmetisch mittlere Partikelgröße der Latexpartikel, die aus dem Polymerisat P, der Saccharidverbindung S und gegebenenfalls der Polymersaat bestehen, in einem Bereich von ≥ 180 nm bis ≤ 800 nm, besonders bevorzugt von ≥ 250 nm bis ≤ 700 nm. Die Bestimmung der Teilchengrößen erfolgte mit Hilfe der hydrodynamischen Fraktionierung mit einem PSDA (Particle Size Distribution Analyser) der Fa. Polymer Labs. Der verwendete Säulentyp Cartridge PL0850-1020 wurde bei einem Durchfluss von 2 ml $min^{-1}$ betrieben. Die Proben wurden mit der Eluentlösung bis zu einer Absorption von 0,03 AU•$\mu l^{-1}$ verdünnt. Die Probe wird durch das Größenausschlussprinzip abhängig vom hydrodynamischen Durchmesser eluiert. Das Elutionsmittel enthält 0,2 Gew.-% Dodecylpoly-$(ethylenglycolether)_{23}$, 0,05 Gew.-% Natriumdodecylsulfonat, 0,02 wt% Natriumdihydrogenphosphat und 0,02 Gew.-% Natriumazid in entionisiertem Wasser. Der pH liegt bei 5,8. Die Elutionszeit wird mit PS-Eichlatices kalibriert. Gemessen wird im Bereich 20 nm bis 1200 nm. Detektiert wird mit einem UV Detektor bei einer Wellenlänge von 254 nm.

Ein weiterer Gegenstand der vorliegenden Erfindung ist eine wässrige Formulierung zum Kleben, umfassend i) die erfindungsgemäße Polymerisatdispersion oder das durch Trocknen daraus erhältliche erfindungsgemäße Polymerisatpulver als Bindemittel, wobei der aus der Polymerisatdispersion oder aus dem Polymerisatpulver stammende Feststoffgehalt in der Formulierung 5 bis 90 Gew.-%, insbesondere 10 bis 30 Gew.-% beträgt, bezogen auf den Gesamtfeststoffgehalt der Formulierung. Der Feststoffgehalt beschreibt den Anteil nicht flüchtiger Anteile. Der Feststoffgehalt einer Dispersion wird mittels einer Waage mit Infrarot-Feuchtebestimmung ermittelt. Hierbei wird eine Menge Polymerisatdispersion in das Gerät eingebracht, auf 140 °C aufgeheizt und anschließend bei dieser Temperatur gehalten. Sobald die mittlere Gewichtsabnahme 1 mg innerhalb von 140s unterschreitet, wird der Messvorgang beendet. Das Verhältnis aus Gewicht nach Trocknung und ursprünglicher Einwaage gibt den Feststoffgehalt der Polymerisatdispersion an. Der Gesamtfeststoffgehalt der Formulierung wird rechnerisch aus den Mengen der zugegebenen Stoffe und deren Feststoffgehalten bzw. Konzentrationen bestimmt.

Die Formulierung zum Kleben eignet sich beispielsweise als Klebstoff um beispielsweise zwei Substrate miteinander zu verbinden. Bevorzugt eignet sich die Formulierung als Bodenbelagsklebstoff.

Die erfindungsgemäße Formulierung zum Kleben umfasst die erfindungsgemäße Polymerisatdispersion und kann alleinig aus dieser bestehen. Die Formulierung kann jedoch neben der Polymerisatdispersion auch weitere Zusatzstoffe enthalten, wie sie in Klebstoffen auf Basis wässriger Polymerisatdispersionen üblich sind. Hierzu zählen Füllstoffe, Farbstoffe, einschließlich Pigmenten, Verdicker, Biozide und gegebenenfalls weitere Hilfsmittel. Weitere für die Formulierung zum Kleben geeignete Additive sind beispielsweise Tackifier (Klebrigmacher bzw. klebrig machende Harze).

Bevorzugt umfasst die erfindungsgemäße Formulierung noch zusätzlich ii) mindestens einen Füllstoff.

Die erfindungsgemäße Formulierung umfasst 25 bis 50 Gew.-% mindestens eines Füllstoffes, bezogen auf die Gesamtmenge der Formulierung, bevorzugt 35 bis 45 Gew.-% mindestens eines Füllstoffes, bezogen auf die Gesamtmenge der Formulierung.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Dispersionen werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Besonders bevorzugt wird Calciumcarbonat als Füllstoff verwendet.

Bevorzugt ist in der erfindungsgemäßen Formulierung der Füllstoff Calciumcarbonat mit einem mittleren Partikeldurchmesser von 2 bis 50 μm oder ein Quarzmehl mit einem mittleren Partikeldurchmesser von 3 bis 50 μm oder eine Kombination der beiden Stoffe. Der mittlere Partikeldurchmesser kann beispielsweise durch Lichtstreumethoden

bestimmt werden. Beispiele für Calciumcarbonat sind Kreide, Kalkstein oder Calcitmarmor.

Bevorzugt umfasst die erfindungsgemäße Formulierung noch zusätzlich iii) mindestens einen Klebrigmacher (Tackifier).

Geeignete Klebrigmacher (Tackifier) sind beispielsweise Naturharze, wie Kolophoniumharze und daraus durch Disproportionierung, Isomerisierung, Polymerisation, Dimerisation oder Hydrierung hergestellten Derivate. Diese können in ihrer Salzform (mit z. B. ein oder mehrwertigen Gegenionen) oder bevorzugt in ihrer veresterten Form vorliegen. Alkohole, die zur Veresterung verwendet werden, können ein oder mehrwertig sein.

Des Weiteren finden als Klebrigmacher auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, $\alpha$-Methylstyrol und Vinyltoluol Verwendung.

Als Klebrigmacher können auch Polyacrylate, welche ein geringes Molgewicht aufweisen, verwendet werden. Vorzugsweise haben diese Polyacrylate ein gewichtsmittleres Molekulargewicht Mw unter 30000 g/mol. Die Polyacrylate bestehen bevorzugt zu mindestens 60, insbesondere mindestens 80 Gew.-% aus C1-C10 Alkyl(meth)acrylaten. Ebenfalls bevorzugte Klebrigmacher sind Polyalkylenglykole.

Bevorzugte Klebrigmacher sind natürliche oder chemisch modifizierte Kolophoniumharze oder Kombinationen davon. Kolophoniumharze bestehen zum überwiegenden Teil aus Abietinsäure oder Abietinsäurederivaten. Besonders bevorzugt werden Kombinationen natürlicher Kolophoniumharze mit chemisch modifizierten Kolophoniumharzen und Polyalkylenglykolen. Die Gewichtsmenge der Klebrigmacher beträgt vorzugsweise 0 bis 50 Gew.-%, besonders bevorzugt 0 bis 40 Gew.-%, insbesondere 5 bis 30 Gew.-%, bezogen auf den Gesamtfeststoffgehalt der Formulierung.

Bevorzugt umfasst die erfindungsgemäße Formulierung

i) 20 bis 55 Gew.-% der Polymerisatdispersion,
ii) 25 bis 50 Gew.-% mindestens eines Füllstoffes,
iii) 5 bis 30 Gew. -% mindestens eines Klebrigmachers,
iv) 0,1 bis 3 Gew.-% mindestens eines Emulgators,
v) 0,05 bis 0,4 Gew.-% mindestens einen Entschäumers,
vi) 0,1 bis 2 Gew.-% mindestens eines Pigmentverteilers,
vii) 0,001 bis 1 Gew.- % mindestens eines Verdickers, und
viii) 0,1 bis 0,8 Gew.-% mindestens eines Benetzungsmittels,

wobei die Summe der Gesamtmenge von i) bis viii) 100 Gew.-% ergibt.

Bevorzugte Emulgatoren und Dispergiermittel wurden vorstehend genannt. Geeignete Entschäumer basieren beispielsweise auf modifizierten Alkoholen und Polysiloxan-Addukten. Geeignete Benetzungsmittel basieren beispielsweise auf ethoxylierten Fettsäuren.

Bevorzugte Entschäumer sind beispielsweise Mineralöl- bzw. Silikonölentschäumer und oxyalkylierte Verbindungen, wie beispielsweise Agitan® 282, Agitan® E255, Byk® 93 FoamStar PB 2706, oder FoamStar SI 2210.

Bevorzugte Pigmentverteiler sind beispielsweise Polymere auf Basis von Carbonsäuren, wie beispielsweise Dispex AA 4135, Dispex CX 4320, Dispex AA 4140, oder Dispex AA 4040. Bevorzugte Verdicker basieren beispielsweise auf anionischen Polyacrylatcopolymeren (wie beispielsweise Rheovis AS 1125), auf Polyurethanen (wie beispielsweise Rheovis PU 1190) oder Cellulose-Derivaten.

Bevorzugte Benetzungsmittel basieren beispielsweise auf ethoxylierten Fettsäuren wie beispielsweise Hydropalat WE 3185, oder auf Natriumsalzen von Sulfosuccinaten wie beispielsweise Hydropalat WE 3450.

Ein weiterer Gegenstand der vorliegenden Erfindung ist die Verwendung der erfindungsgemäßen Formulierung als Klebstoff, besonders bevorzugt als Bodenbelagsklebstoff. Bodenbelagsklebstoffe auf Basis von Emulsionspolymerisaten, insbesondere auf Basis von Acrylatlatices sind bekannt.

Die erfindungsgemäß verwendete Formulierung als Klebstoff weist sehr gute Klebeeigenschaften, insbesondere eine gute Adhäsion zu den zu verklebenden Substraten und eine hohe Kohäsion (innere Festigkeit in der Klebstoffschicht) auf. Die Formulierung ist außerdem einfach zu handhaben und hat gute Verarbeitungseigenschaften. Hinsichtlich der Verklebung von flexiblen Fußbodenbelägen ist er gegenüber Klebstoffen des Standes der Technik durch deutlich erhöhte Werte des Trockenanfass-Vermögens bei gleichbleibend guten weiteren Eigenschaften, insbesondere des Nassanzugsvermögens, überlegen.

Vorzugsweise weist der erfindungsgemäß verwendete Bodenbelagsklebstoff ein Nassanzugvermögen in einem Bereich von 5 bis 10 N/5cm (Abschälwiderstandwert, mit Auftragsmenge des Klebers von 300-350 g/$m^2$) und ein Trockenanfass-Vermögen in einem Bereich von 20 bis 30 N/5cm (Abschälwiderstandwert, mit Auftragsmenge des Klebers von 280-320 g/$m^2$) auf.

Alle vorstehend aufgeführten Ausführungsformen und bevorzugten Ausführungsformen sind frei miteinander kombinierbar, sofern der Kontext nicht eindeutig dagegen spricht.

Die Erfindung wird durch die nachstehenden Beispiele näher erläutert.

**Tabelle 1.** Zuordnung Dispersionen zu Formulierungen

| Dispersion aus: | Bestandteil der Formulierung: |
|---|---|
| Vergleichsdispersion 1 | Vergleichsformulierungen 1a, 1b, 1c, 1d, 1e |
| Beispiel 1 | Formulierung 1 |
| Beispiel 2 | Formulierung 2 |
| Beispiel 3 | Formulierung 3 |
| Beispiel 4 | Formulierung 4 |
| Vergleichsbeispiel 2 | Vergleichsformulierung 2 |
| Vergleichsbeispiel 3 | Vergleichsformulierung 3 |
| Vergleichsbeispiel 4 | Vergleichsformulierung 4 |
| Vergleichsbeispiel 5 | Vergleichsformulierung 5 |
| Vergleichsbeispiel 6 | Vergleichsformulierung 6 |

## Beispiel 1

In einem Glasreaktor ausgerüstet mit einem Rührer, Dosiereinrichtungen, Temperaturfühler sowie Rückflusskühler wurde bei Raumtemperatur eine Mischung von 386,54 g Wasser, 6,15 g einer 9,1 gew.-%igen wässrigen Lösung von L(+)-Ascorbinsäure, 0,85 g einer 33 gew.-%igen wässrigen Polystyrolsaatdispersion (mittlerer Teilchendurchmesser 32 nm) und 297,71 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 40 g | 7 gew.-%ige wässrige Lösung von Natriumpersulfat |
| Zulauf 2: | 125,77 g | Wasser |
| | 105,00 g | 20 gew.-%ige wässrige Lösung von Natriumdodecylbenzylsulfonat |
| | 17,50 g | Acrylsäure (AS) |
| | 0,35 g | 2-Ethylhexylthioglykolat |
| | 70,00 g | 2-Ethylhexylacrylat (EHA) |
| | 70,00 g | Acrylnitril (AN) |
| | 542,50 g | n-Butylacrylat (nBA) |

Dann wurden 13,09 g Wasser zum Reaktor gegeben und die Reaktionsmischung für 30 min bei 85 °C gerührt, dann wurden erneut 19,67 g Wasser zugegeben. Zur chemischen Desodorierung wurden folgende zwei Mischungen als zwei separate Zuläufe mit konstanter Zulaufrate über 2h zugegeben: a) 29.40 g einer 10%igen wässrigen Lösung von tert-Butylhydroperoxid, b) 28,32 g einer 13,1%igen Lösung von Natriumacetonbisulfit und 1,47 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 21,00 g einer 10%igen wässrigen Ammoniaklösung innerhalb von 30 min zugegeben sowie anschließend 95,47 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 53 % bei einem pH-Wert von 6,6 auf. Der LD beträgt LD = 70 (Die Bestimmung der mittleren Teilchendurchmesser erfolgt über die Methode der quasielastischen Lichtstreuung (ISO-Norm 13 321)] und die Viskosität beträgt 164 mPas (gemessen bei 500 Umdrehungen pro

Sekunde).

## Vergleichsdispersion 1

In einem Glasreaktor ausgerüstet mit einem Rührer, Dosiereinrichtungen, Temperaturfühler sowie Rückflusskühler wurde bei Raumtemperatur eine Mischung von 226,07 g Wasser, 9,23 g einer 9,1 gew.-%igen wässrigen Lösung von L(+)-Ascorbinsäure und 1,27 g einer 33 gew.-%igen wässrigen Polystyrolsaatdispersion (mittlerer Teilchendurchmesser 32 nm) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 85,50 g | 7 gew.-%ige wässrige Lösung von Natriumpersulfat |
| Zulauf 2: | 219,83 g | Wasser |
| | 114,84 g | 32 gew.-%ige wässrige Lösung von Emulphor FAS 30 |
| | 26,25 g | 20 gew.-%ige wässrige Lösung von Lutensol AT 18 |
| | 26,25 g | Acrylsäure (AS) |
| | 20,16 g | 25 gew.-%ige wässrige Natronlauge |
| | 105,00 g | Acrylnitril (AN) |
| | 918,75 g | n-Butylacrylat (nBA) |

Dann wurden 19,64 g Wasser zum Reaktor gegeben und die Reaktionsmischung für 30 min bei 85 °C gerührt, dann wurden erneut 29,51 g Wasser zugegeben. Zur chemischen Desodorierung wurden folgende zwei Mischungen als zwei separate Zuläufe mit konstanter Zulaufrate über 2h zugegeben: a) 40,95 g einer 10%igen wässrigen Lösung von tert-Butylhydroperoxid, b) 39,60 g einer 13,1 %igen Lösung von Natriumacetonbisulfit und 2,00 g Wasser. Nach 30 min wurde die Temperatur innerhalb von 15 min kontinuierlich auf 70 °C gesenkt und dann bei dieser Temperatur gehalten. Dann wurden 23,10 g einer 10%igen wässrigen Ammoniaklösung innerhalb von 30 min zugegeben sowie anschließend 113,06 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 55,7 % bei einem pH-Wert von 7,1 auf. Der LD beträgt LD = 54 (Die Bestimmung der mittleren Teilchendurchmesser erfolgt über die Methode der quasielastischen Lichtstreuung (ISO-Norm 13 321)] und die Viskosität beträgt 66 mPas (gemessen bei 500 Umdrehungen pro Sekunde).

## Formulierung für das Beispiel 1:

Formulierung 1 wird aus der in Beispiel 1 hergestellten Polymerisatdispersion und weiteren Komponenten hergestellt. Die Vergleichsdispersion 1 wird genauso formuliert, und ergibt die Vergleichsformulierung 1a. Das Herstellen der Formulierung 1 und Vergleichsformulierung 1a erfolgt folgendermaßen:
Unter Rühren werden bei 23 °C den 27,3 Gew.-Teilen Dispersion 8,6 Gew.-Teile Rheovis AS 1125 (Verdicker; in Form einer 3%igen Lösung) zugegeben. Anschließend werden 19 Gew.-Teile einer heißen Harzmischung (Tackifier; Mischung bestehend aus 50 Gew.-% Dercol M10, 50 Gew.-% Bremasin 1601; wird vor der Zugabe auf 95 °C erwärmt), innerhalb von 15 Minuten unter Rühren zugegeben, und noch 10 Minuten nachgerührt. 0,5 Gew.-Teile Emulphor FAS30 (Emulgator), 0,2 Gew.-Teile FoamStar SI 2210 (Entschäumer), 1 Gew.-Teil Dispex AA4135 (Pigmentverteiler) und 0,4 Gew.-Teile Hydropalat WE 3185 (Benetzungsmittel) werden nacheinanderr unter Rühren zugegeben. Anschließend werden 43 Gew.-Teile Omyacarb 10 GU (Füllstoff) unter Rühren eingemischt und weitere 10 Minuten nachgerührt.

**Bestimmung des Nassanzugvermögens:**

Die Formulierung wird als Klebstoff mit der Zahnleiste TKB B 1 auf Faserzementplatten (z.B. Eternit® 2000, 500 x 200 mm) in Abzugsrichtung aufgetragen. Die applizierte Menge beträgt ca. 300 - 350 g/$m^2$. NBB (Nadelfilz-Bodenbelag Finett 11)-Streifen (150 x 50 x 5,2 mm) werden nach 10 Minuten ablüften in das Klebstoffbett eingelegt und

mit einer 2,5 kg Walze durch dreimal Hin- u. Herrollen angepresst. In Zeitabständen (10, 20, 30 u. 40 Minuten) werden die Beläge mit einem Abzugsgerät abgezogen und die Zunahme des Abschälwiderstandes (in N/5cm) bestimmt.

**Bestimmung des Trockenanfass-Vermögens:**

Die Formulierung wird als Klebstoff mit der Zahnleiste TKB A2 auf Faserzementplatten (zB. Eternit® 2000, 500 x 200 mm) in Abzugsrichtung aufgetragen. Die applizierte Menge beträgt ca. 280 - 320 g/m$^2$. PVC-Streifen (Tarkett Standard 2 mm; 150 x 50 x 2 mm) werden nach unterschiedlicher Ablüftzeit (30, 40, 50 u. 60 Minuten) in das Klebstoffbett eingelegt und mit einer 2,5 kg Walze durch dreimal Hin- u. Herrollen angepresst. Anschließend werden die Streifen mit einem Abzugsgerät abgezogen und die Zunahme des Abschälwiderstandes (in N/5cm) bestimmt.

In der folgenden Tabelle 2 werden die erfindungsgemäße Formulierung und die Vergleichsformulierung gegenübergestellt. Wie aus der Tabelle 2 ersichtlich ist, weist die erfindungsgemäße Formulierung 1 gegenüber der Vergleichsformulierung 1a ein verbessertes Trockenanfass-Vermögen bei erhaltenem Nassanzugsvermögen auf.

**Tabelle 2**

| Prüfung | Prüfung nach | Ablüftzeit | Vergleichsformulierung 1a (in N/5 cm) | Formulierung 1 (in N/5 cm) |
|---|---|---|---|---|
| **Nassanzugsvermögen** | 10 min | 10 min | 3 | 5 |
| | 20 min | 10 min | 3 | 10 |
| | 30 min | 10 min | 5 | 8 |
| | 40 min | 10 min | 11 | 10 |
| **Trockenanfassvermögen** | 30 min | 30 min | 8 | 20 |
| | 40 min | 40 min | 16 | 30 |
| | 50 min | 50 min | 19 | 30 |
| | 60 min | 60 min | 13 | 30 |

**Beispiel 2**

In einem Glasreaktor ausgerüstet mit einem Rührer, Dosiereinrichtungen, Temperaturfühler sowie Rückflusskühler wurde bei Raumtemperatur eine Mischung von 71,35 g Wasser, 4,95 g einer 9,1 gew.-%igen wässrigen Lösung von L(+)-Ascorbinsäure, 0,68 g einer 33 gew.-%igen wässrigen Polystyrolsaatdispersion (mittlerer Teilchendurchmesser 32 nm) und 478.46 g einer 50 gew.-%igen wässrigen Maltodextrinlösung (DE-Wert 16,5-19,9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 45,80 g | 7 gew.-%ige wässrige Lösung von Natriumpersulfat |
| Zulauf 2: | 117,78 g | Wasser |
| | 61,52 g | 32 gew.-%ige wässrige Lösung von Emulphor FAS 30 |
| | 14,06 g | 20 gew.-%ige wässrige Lösung Lutensol AT 18 |
| | 14,06 g | Acrylsäure (AS) |
| | 0,51 g | tert-Dodecylmercaptan |
| | 10,80 g | 25 gew.-%ige wässrige Lösung von Natriumhydroxid |
| | 56,25 g | Acrylnitril (AN) |
| | 491,68 g | n-Butylacrylat (nBA) |

Dann wurden 10,52 g Wasser zum Reaktor gegeben und die Reaktionsmischung für 30 min bei 85 °C gerührt,

dann wurden erneut 15,81 g Wasser zugegeben. Zur chemischen Desodorierung wurden folgende zwei Mischungen als zwei separate Zuläufe mit konstanter Zulaufrate über 2h zugegeben: a) 23,63 g einer 10%igen wässrigen Lösung von tert-Butylhydroperoxid, b) 22,76 g einer 13,1%igen Lösung von Natriumacetonbisulfit und 1,18 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 12,38 g einer 10%igen wässrigen Ammoniaklösung innerhalb von 30 min zugegeben sowie anschließend 64,80 g Wasser zugegeben. Die Dispersion wurde auf Raumtemperatur abgekühlt, Biozide zugegeben und filtriert. Die Dispersion wies einen Feststoffgehalt von 54,5 Gew.-% bezogen auf das Gesamtgewicht der wässrigen Dispersion auf.

**Formulierung für das Beispiel 2:**

Formulierung 2 wird aus der in Beispiel 2 hergestellten Polymerisatdispersion und weiteren Komponenten hergestellt. Die Vergleichsdispersion 1 wird genauso formuliert, und ergibt die Vergleichsformulierung 1b. Das Herstellen der Formulierung 2 und Vergleichsformulierung 1b erfolgt folgendermaßen:
Unter Rühren werden bei 23 °C den 40 Gew.-Teilen Dispersion, 5,5 Gew.-Teile Rheovis AS 1125 (Verdicker; bei Formulierung 2 in Form einer 8 %igen Lösung, bei der Vergleichsformulierung 1b in Form einer 6 %igen Lösung) zugegeben. Anschließend werden 15 Gew.-Teile einer heißen Harzmischung (Tackifier; Mischung bestehend aus 45 Gew.-% Dercol M10, 45 Gew.-% Bremasin 1601, und 10 Gew.-% Pluriol P600; wird vor der Zugabe auf 95 °C erwärmt), innerhalb von 15 Minuten unter Rühren zugegeben, und noch 10 Minuten nachgerührt. 1 Gew.-Teil Emulphor FAS30 (Emulgator), 0,2 Gew.-Teile FoamStar SI 2210 (Entschäumer), 1 Gew.-Teil Dispex AA4135 (Pigment Verteiler) und 0,2 Gew.-Teile Hydropalat WE 3185 (Benetzungsmittel) werden nacheinander unter Rühren zugegeben. Anschließend werden 37,1 Gew.-Teile Omyacarb 10 GU (Füllstoff) unter Rühren eingemischt und weitere 10 Minuten nachgerührt.

**Bestimmung des Nassanzugvermögens:**

Die Formulierung wird als Klebstoff mit der Zahnleiste TKB B 1 auf Faserzementplatten (zB. Eternit® 2000, 500 x 200 mm) in Abzugsrichtung aufgetragen. Die applizierte Menge beträgt ca. 300 - 350 g/m$^2$. NBB (Nadelfilz-Bodenbelag Finett 11)-Streifen (150 x 50 x 5,2 mm) werden nach 10 Minuten ablüften in das Klebstoffbett eingelegt u. mit einer 2,5 kg Walze durch 3 mal Hin- u. Herrollen angepresst. In Zeitabständen (10, 20, 30 u. 40 Minuten) werden die Beläge mit einem Abzugsgerät abgezogen und die Zunahme des Abschälwiderstandes (in N/5cm) bestimmt.

**Bestimmung des Trockenanfass-Vermögens:**

Die Formulierung wird als Klebstoff mit der Zahnleiste TKB A2 auf Faserzementplatten (zB. Eternit® 2000, 500 x 200 mm) in Abzugsrichtung aufgetragen. Die applizierte Menge beträgt ca. 280 - 320 g/m$^2$. PVC-Streifen (Tarkett Standard 2 mm; 150 x 50 x 2 mm) werden nach unterschiedlicher Ablüftzeit (40, 50, 60 u. 70 Minuten) in das Klebstoffbett eingelegt und mit einer 2,5 kg Walze durch dreimal Hin- u. Herrollen angepresst. Anschließend werden die Streifen mit einem Abzugsgerät abgezogen und die Zunahme des Abschälwiderstandes (in N/5cm) bestimmt.

In der folgenden Tabelle 3 werden die erfindungsgemäße Formulierung und die Vergleichsformulierung 1b gegenübergestellt. Wie aus Tabelle 3 ersichtlich ist, weist die erfindungsgemäße Formulierung ein verbessertes Trockenanfass-Vermögen bei erhaltenem Nassanzugsvermögen auf.

**Tabelle 3**

| Prüfung | Prüfung nach | Ablüftzeit | Vergleichsformulierung 1b (in N/5 cm) | Formulierung 2 (in N/5 cm) |
|---|---|---|---|---|
| **Nassanzugsvermögen** | 10 min | 10 min | 1 | 2 |
| | 20 min | 10 min | 4 | 4 |
| | 30 min | 10 min | 4 | 6 |
| | 40 min | 10 min | 7 | 10 |

(fortgesetzt)

| Prüfung | Prüfung nach | Ablüftzeit | Vergleichsformulierung 1b (in N/5 cm) | Formulierung 2 (in N/5 cm) |
|---|---|---|---|---|
| Trockenanfassvermögen | 40 min | 40 min | 4 | 12 |
| | 50 min | 50 min | 11 | 19 |
| | 60 min | 60 min | 13 | 34 |
| | 70 min | 70 min | 17 | 22 |

## Beispiel 3

In einem Glasreaktor ausgerüstet mit einem Rührer, Dosiereinrichtungen, Temperaturfühler sowie Rückflusskühler wurde bei Raumtemperatur eine Mischung von 266,35 g Wasser, 4,22 g einer 9,1 gew.-%igen wässrigen Lösung von L(+)-Ascorbinsäure, 0,58 g einer 33 gew.-%igen wässrigen Polystyrolsaatdispersion (mittlerer Teilchendurchmesser 32 nm) und 205,73 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 27,43 g | 7 gew.-%ige wässrige Lösung von Natriumpersulfat |
| Zulauf 2: | 86,24 g | Wasser |
| | 72,00 g | 20 gew.-%ige wässrige Lösung von Natriumdodecylbenzylsulfonat |
| | 12,00 g | Acrylsäure (AS) |
| | 0,24 g | 2-Ethylhexylthioglykolat |
| | 144,00 g | 2-Ethylhexylacrylat (EHA) |
| | 48,00 g | Acrylnitril (AN) |
| | 276,00 g | n-Butylacrylat (nBA) |

Dann wurden 8,98 g Wasser zum Reaktor gegeben und die Reaktionsmischung für 30 min bei 85 °C gerührt, dann wurden erneut 13,49 g Wasser zugegeben. Zur chemischen Desodorierung wurden folgende zwei Mischungen als zwei separate Zuläufe mit konstanter Zulaufrate über 2h zugegeben: a) 20,16 g einer 10%igen wässrigen Lösung von tert-Butylhydroperoxid, b) 19,42 g einer 13,1 %igen Lösung von Natriumacetonbisulfit und 1,01 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 5,76 g einer 25%igen wässrigen Ammoniaklösung innerhalb von 30 min zugegeben sowie anschließend 55,30 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 53,8% bei einem pH-Wert von 5,7 auf. Der LD beträgt LD = 72 (Die Bestimmung der mittleren Teilchendurchmesser erfolgt über die Methode der quasielastischen Lichtstreuung (ISO-Norm 13 321)] und die Viskosität beträgt 188 mPas (gemessen bei 500 Umdrehungen pro Sekunde).

## Formulierung für das Beispiel 3:

Formulierung 3 wird aus der in Beispiel 3 hergestellten Polymerisatdispersion und weiteren Komponenten hergestellt. Die Vergleichsdispersion 1 wird genauso formuliert, und ergibt die Vergleichsformulierung 1c. Das Herstellen der Formulierung 3 und Vergleichsformulierung 1c erfolgt folgendermaßen:

Unter Rühren werden bei 23 °C den 27,3 Gew.-Teilen Dispersion, 8,6 Gew.-Teile Rheovis AS 1125 (Verdicker; bei Formulierung 3 in Form einer 2 %igen Lösung, bei der Vergleichsformulierung in Form einer 3%igen Lösung) zugegeben.

Anschließend werden 19 Gew.-Teile einer heißen Harzmischung (Tackifier; Mischung bestehend aus 50 Gew.-% Dercol M10, 50 Gew.-% Bremasin 1601; wird vor der Zugabe auf 95 °C erwärmt), innerhalb 15 Minuten unter Rühren zugegeben, und noch 10 Minuten nachgerührt. 0,5 Gew.-Teile Emulphor FAS30 (Emulgator), 0,3 Gew.-Teile FoamStar SI 2210 (Entschäumer), 1,0 Gew.-Teil Dispex AA4135 (Pigmentverteiler) und 0,4 Gew.-Teile Hydropalat WE 3185 (Benetzungsmittel) werden nacheinander unter Rühren zugegeben. Anschließend werden 42,9 Gew.-Teile Omyacarb 10 GU (Füllstoff) unter Rühren eingemischt und weitere 10 Minuten nachgerührt.

**Bestimmung des Nassanzugvermögens:**

Die Formulierung wird als Klebstoff mit der Zahnleiste TKB B 1 auf Faserzementplatten (zB. Eternit® 2000, 500 x 200 mm) in Abzugsrichtung aufgetragen. Die applizierte Menge beträgt ca. 300 - 350 g/m$^2$. NBB (Nadelfilz-Bodenbelag Finett 11) Streifen (150 x 50 x 5,2 mm) werden nach 10 Minuten ablüften in das Klebstoffbett eingelegt u. mit einer 2,5 kg Walze durch dreimal Hin- u. Herrollen angepresst. In Zeitabständen (10, 20, 30 u. 40 Minuten) werden die Beläge mit einem Abzugsgerät abgezogen und die Zunahme des Abschälwiderstandes (in N/5cm) bestimmt.

**Bestimmung des Trockenanfass-Vermögens:**

Die Formulierung wird als Klebstoff mit der Zahnleiste TKB A2 auf Faserzementplatten (zB. Eternit® 2000, 500 x 200 mm) in Abzugsrichtung aufgetragen. Die applizierte Menge beträgt ca. 280 - 320 g/m$^2$. PVC-Streifen (Tarkett Standard 2 mm; 150 x 50 x 2 mm) werden nach unterschiedlicher Ablüftzeit (30, 40, 50 u. 60 Minuten) in das Klebstoffbett eingelegt und mit einer 2,5 kg Walze durch dreimal Hin- u. Herrollen angepresst. Anschließend werden die Streifen mit einem Abzugsgerät abgezogen und die Zunahme des Abschälwiderstandes (in N/5cm) bestimmt.

In der folgenden Tabelle 4 werden die erfindungsgemäße Formulierung 3 und die Vergleichsformulierung 1c gegenübergestellt. Wie aus Tabelle 4 ersichtlich ist, weist die erfindungsgemäße Formulierung ein verbessertes Trockenanfass-Vermögen bei erhaltenem Nassanzugsvermögen auf.

**Tabelle 4**

| Prüfung | Prüfung nach | Ablüftzeit | Vergleichsformulierung 1c (in N/5 cm) | Formulierung 3 (in N/5 cm) |
|---|---|---|---|---|
| **Nassanzugvermögen** | 10 min | 10 min | 3 | 12 |
| | 20 min | 10 min | 18 | 27 |
| | 30 min | 10 min | 30 | 30 |
| | 40 min | 10 min | 38 | 34 |
| **Trockenanfassvermögen** | 30 min | 30 min | 16 | 14 |
| | 40 min | 40 min | 10 | 21 |
| | 50 min | 50 min | 12 | 18 |
| | 60 min | 60 min | 9 | 18 |

## Beispiel 4

In einem Glasreaktor ausgerüstet mit einem Rührer, Dosiereinrichtungen, Temperaturfühler sowie Rückflusskühler wurde bei Raumtemperatur eine Mischung von 266,35 g Wasser, 4,22 g einer 9,1 gew.-%igen wässrigen Lösung von L(+)-Ascorbinsäure, 0,58 g einer 33 gew.-%igen wässrigen Polystyrolsaatdispersion (mittlerer Teilchendurchmesser 32 nm) und 205,73 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

Zulauf 1: 39,09 g 7 gew.-%ige wässrige Lösung von Natriumpersulfat

(fortgesetzt)

| | | |
|---|---|---|
| Zulauf 2: | 86,24 g | Wasser |
| | 72,00 g | 20 gew.-%ige wässrige Lösung von Natriumdodecylbenzylsulfonat |
| | 12,00 g | Acrylsäure (AS) |
| | 0,24 g | 2-Ethylhexylthioglykolat |
| | 48,00 g | 2-Ethylhexylacrylat (EHA) |
| | 4,80 g | Styrol (S) |
| | 48,00 g | Acrylnitril (AN) |
| | 367,20 g | n-Butylacrylat (nBA) |

Dann wurden 8,98 g Wasser zum Reaktor gegeben und die Reaktionsmischung für 30 min bei 85 °C gerührt, dann wurden erneut 13,49 g Wasser zugegeben. Zur chemischen Desodorierung wurden folgende zwei Mischungen als zwei separate Zuläufe mit konstanter Zulaufrate über 2h zugegeben: a) 20,16 g einer 10%igen wässrigen Lösung von tert-Butylhydroperoxid, b) 19,42 g einer 13,1%igen Lösung von Natriumacetonbisulfit und 1,01 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 5,76 g einer 25%igen wässrigen Ammoniaklösung innerhalb von 30 min zugegeben sowie anschließend 63,94 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 54,6% bei einem pH-Wert von 5,8 auf. Der LD beträgt LD = 74 (Die Bestimmung der mittleren Teilchendurchmesser erfolgt über die Methode der quasielastischen Lichtstreuung (ISO-Norm 13 321)] und die Viskosität beträgt 211 mPas (gemessen bei 500 Umdrehungen pro Sekunde).

**Formulierung für das Beispiel 4:**

Die Formulierung 4 wird aus der in Beispiel 4 hergestellten Polymerisatdispersion und weiteren Komponenten hergestellt. Die Vergleichsdispersion 1 wird genauso formuliert, und ergibt die Vergleichsformulierung 1d. Das Herstellen der Formulierung 4 und Vergleichsformulierung 1d erfolgt folgendermaßen:
Unter Rühren werden bei 23 °C den 40 Gew.-Teilen Dispersion, 5,5 Gew.-Teile Rheovis AS 1125 (Verdicker; bei Formulierung 4 in Form einer 3 %igen Lösung, bei der Vergleichsformulierung 1d in Form einer 6%igen Lösung) zugegeben. Anschließend werden 15 Gew.-Teile einer heißen Harzmischung (Tackifier; Mischung bestehend aus 50 Gew.-% Dercol M10, 50 Gew.-% Bremasin 1601; wird vor der Zugabe auf 95 °C erwärmt), innerhalb 15 Minuten unter Rühren zugegeben, und noch 10 Minuten nachgerührt. 1 Gew.-TeilEmulphor FAS30 (Emulgator), 0,3 Gew.-Teile FoamStar SI 2210 (Entschäumer), 1,0 Gew.-Teil Dispex AA4135 (Pigmentverteiler) und 0,2 Gew.-Teile Hydropalat WE 3185 (Benetzungsmittel) werden nacheinander unter Rühren zugegeben. Anschließend werden 37 Gew.-Teile Omyacarb 10 GU (Füllstoff) unter Rühren eingemischt und weitere 10 Minuten nachgerührt.

**Bestimmung des Nassanzugvermögens:**

Die Formulierung wird als Klebstoff mit der Zahnleiste TKB B 1 auf Faserzementplatten (zB. Eternit® 2000, 500 x 200 mm) in Abzugsrichtung aufgetragen. Die applizierte Menge beträgt ca. 300 - 350 g/m$^2$. NBB (Nadelfilz-Bodenbelag Finett 11) Streifen (150 x 50 x 5,2 mm) werden nach 10 Minuten ablüften in das Klebstoffbett eingelegt u. mit einer 2,5 kg Walze durch dreimal Hin- u. Herrollen angepresst. In Zeitabständen (10, 20, 30 u. 40 Minuten) werden die Beläge mit einem Abzugsgerät abgezogen und die Zunahme des Abschälwiderstandes (in N/5cm) bestimmt.

**Bestimmung des Trockenanfass-Vermögens:**

Die Formulierung wird als Klebstoff mit der Zahnleiste TKB A2 auf Faserzementplatten (zB. Eternit® 2000, 500 x 200 mm) in Abzugsrichtung aufgetragen. Die applizierte Menge beträgt ca. 280 - 320 g/m$^2$. PVC-Streifen (Tarkett Standard 2 mm; 150 x 50 x 2 mm) werden nach unterschiedlicher Ablüftzeit (30, 40, 50 u. 60 Minuten) in das Klebstoffbett eingelegt und mit einer 2,5 kg Walze durch dreimal Hin- u. Herrollen angepresst. Anschließend werden die Streifen mit einem Abzugsgerät abgezogen und die Zunahme des Abschälwiderstandes (in N/5cm) bestimmt.

In der folgenden Tabelle 5 wird die erfindungsgemäße Formulierung 4 und die Vergleichsformulierung 1d gegenübergestellt. Wie aus Tabelle 5 ersichtlich ist, weist die erfindungsgemäße Formulierung 4 ein verbessertes Trockenanfass-Vermögen bei erhaltenem Nassanzugsvermögen auf.

**Tabelle 5**

| Prüfung | Prüfung nach | Ablüftzeit | Vergleichsformulierung 1d (in N/5 cm) | Formulierung 4 (in N/5 cm) |
|---|---|---|---|---|
| **Nassanzugvermögen** | 10 min | 10 min | 2 | 20 |
| | 20 min | 10 min | 6 | 33 |
| | 30 min | 10 min | 15 | 41 |
| | 40 min | 10 min | 25 | 42 |
| **Trockenanfassvermögen** | 30 min | 30 min | 3 | 27 |
| | 40 min | 40 min | 10 | 35 |
| | 50 min | 50 min | 25 | 37 |
| | 60 min | 60 min | 30 | 35 |

**Vergleichsbeispiele 2, 3, 4, 5 und 6:**

In den Vergleichsbeispielen 2, 3, 4, 5 und 6 wurden Dispersionen hergestellt mit wenigstens 30 Gew.% eines ethylenisch ungesättigten Monomeren, dessen Homopolymerisat eine Glasübergangstemperatur ≥ 50 °C aufweist. Damit soll gezeigt werden, dass eine solche Dispersion in einer Bodenbelagsklebstoff-Formulierung kein verbessertes Trockenanfassvermögen bei erhaltenem Nassanzugsvermögen ermöglicht, im Gegenteil zu einer erfindungsgemäßen Dispersion (Beispiele 1 bis 4).

**Vergleichsbeispiel 2**

In einem Glasreaktor ausgerüstet mit einem Rührer, Dosiereinrichtungen, Temperaturfühler sowie Rückflusskühler wurde bei Raumtemperatur eine Mischung von 266,35 g Wasser, 4,22 g einer 9,1 gew.-%igen wässrigen Lösung von L(+)-Ascorbinsäure, 0,58 g einer 33 gew.-%igen wässrigen Polystyrolsaatdispersion (mittlerer Teilchendurchmesser 32 nm) und 205,73 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 39,09 g | 7 gew.-%ige wässrige Lösung von Natriumpersulfat |
| Zulauf 2: | 86,24 g | Wasser |
| | 72,00 g | 20 gew.-%ige wässrige Lösung von Natriumdodecylbenzylsulfonat |
| | 12,00 g | Acrylsäure (AS) |
| | 0,24 g | 2-Ethylhexylthioglykolat |
| | 48,00 g | 2-Ethylhexylacrylat (EHA) |
| | 144,00 g | Styrol (S) |
| | 48,00 g | Acrylnitril (AN) |
| | 228,00 g | n-Butylacrylat (nBA) |

Dann wurden 8,98 g Wasser zum Reaktor gegeben und die Reaktionsmischung für 30 min bei 85 °C gerührt, dann wurden erneut 13,49 g Wasser zugegeben. Zur chemischen Desodorierung wurden folgende zwei Mischungen als zwei separate Zuläufe mit konstanter Zulaufrate über 2h zugegeben: a) 20,16 g einer 10%igen wässrigen Lösung von tert-Butylhydroperoxid, b) 19,42 g einer 13,1 %igen Lösung von Natriumacetonbisulfit und 1,01 g Wasser. Nach 30 min wurde die Temperatur innerhalb von 15 min kontinuierlich auf 70 °C gesenkt und dann bei dieser Temperatur

gehalten, wobei ein leichter Stickstoffstrom durch die Apparatur und eine angeschlossene Kühlfalle mit Trockeneis geleitet wurde. Dann wurden 5,76 g einer 25%igen wässrigen Ammoniaklösung innerhalb von 30 min zugegeben sowie anschließend 63,94 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 54,2% bei einem pH-Wert von 5,5 auf. Der LD beträgt LD = 68 (Die Bestimmung der mittleren Teilchendurchmesser erfolgt über die Methode der quasielastischen Lichtstreuung (ISO-Norm 13 321)] und die Viskosität beträgt 300 mPas (gemessen bei 500 Umdrehungen pro Sekunde).

**Vergleichsbeispiel 3**

In einem Glasreaktor ausgerüstet mit einem Rührer, Dosiereinrichtungen, Temperaturfühler sowie Rückflusskühler wurde bei Raumtemperatur eine Mischung von 266,35 g Wasser, 4,22 g einer 9,1 gew.-%igen wässrigen Lösung von L(+)-Ascorbinsäure, 0,58 g einer 33 gew.-%igen wässrigen Polystyrolsaatdispersion (mittlerer Teilchendurchmesser 32 nm) und 205,73 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 39,09 g | 7 gew.-%ige wässrige Lösung von Natriumpersulfat |
| Zulauf 2: | 86,24 g | Wasser |
| | 72,00 g | 20 gew.-%ige wässrige Lösung von Natriumdodecylbenzylsulfonat |
| | 12,00 g | Acrylsäure (AS) |
| | 0,24 g | 2-Ethylhexylthioglykolat |
| | 48,00 g | 2-Ethylhexylacrylat (EHA) |
| | 144,00 g | Methylmethacrylat (MMA) |
| | 48,00 g | Acrylnitril (AN) |
| | 228,00 g | n-Butylacrylat (nBA) |

Dann wurden 8,98 g Wasser zum Reaktor gegeben und die Reaktionsmischung für 30 min bei 85 °C gerührt, dann wurden erneut 13,49 g Wasser zugegeben. Zur chemischen Desodorierung wurden folgende zwei Mischungen als zwei separate Zuläufe mit konstanter Zulaufrate über 2h zugegeben: a) 20,16 g einer 10%igen wässrigen Lösung von tert-Butylhydroperoxid, b) 19,42 g einer 13,1 %igen Lösung von Natriumacetonbisulfit und 1,01 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 5,76 g einer 25%igen wässrigen Ammoniaklösung innerhalb von 30 min zugegeben sowie anschließend 63,94 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 53,7% bei einem pH-Wert von 6,3 auf. Der LD beträgt LD = 80 (Die Bestimmung der mittleren Teilchendurchmesser erfolgt über die Methode der quasielastischen Lichtstreuung (ISO-Norm 13 321)] und die Viskosität beträgt 256 mPas (gemessen bei 500 Umdrehungen pro Sekunde).

**Vergleichsbeispiel 4**

In einem Glasreaktor ausgerüstet mit einem Rührer, Dosiereinrichtungen, Temperaturfühler sowie Rückflusskühler wurde bei Raumtemperatur eine Mischung von 266,35 g Wasser, 4,22 g einer 9,1 gew.-%igen wässrigen Lösung von L(+)-Ascorbinsäure, 0,58 g einer 33 gew.-%igen wässrigen Polystyrolsaatdispersion (mittlerer Teilchendurchmesser 32 nm) und 205,73 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2

gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 39,09 g | 7 gew.-%ige wässrige Lösung von Natriumpersulfat |
| Zulauf 2: | 86,24 g | Wasser |
| | 72,00 g | 20 gew.-%ige wässrige Lösung von Natriumdodecylbenzylsulfonat |
| | 12,00 g | Acrylsäure (AS) |
| | 0,24 g | 2-Ethylhexylthioglykolat |
| | 48,00 g | 2-Ethylhexylacrylat (EHA) |
| | 144,00 g | tert-Butylacrylat (tBA) |
| | 48,00 g | Acrylnitril (AN) |
| | 228,00 g | n-Butylacrylat (nBA) |

Dann wurden 8,98 g Wasser zum Reaktor gegeben und die Reaktionsmischung für 30 min bei 85 °C gerührt, dann wurden erneut 13,49 g Wasser zugegeben. Zur chemischen Desodorierung wurden folgende zwei Mischungen als zwei separate Zuläufe mit konstanter Zulaufrate über 2h zugegeben: a) 20,16 g einer 10%igen wässrigen Lösung von tert-Butylhydroperoxid, b) 19,42 g einer 13,1 %igen Lösung von Natriumacetonbisulfit und 1,01 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 5,76 g einer 25%igen wässrigen Ammoniaklösung innerhalb von 30 min zugegeben sowie anschließend 63,94 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 54,2% bei einem pH-Wert von 5,2 auf. Der LD beträgt LD = 73 (Die Bestimmung der mittleren Teilchendurchmesser erfolgt über die Methode der quasielastischen Lichtstreuung (ISO-Norm 13 321)] und die Viskosität beträgt 233 mPas (gemessen bei 500 Umdrehungen pro Sekunde).

**Vergleichsbeispiel 5**

In einem Glasreaktor ausgerüstet mit einem Rührer, Dosiereinrichtungen, Temperaturfühler sowie Rückflusskühler wurde bei Raumtemperatur eine Mischung von 266,35 g Wasser, 4,22 g einer 9,1 gew.-%igen wässrigen Lösung von L(+)-Ascorbinsäure, 0,58 g einer 33 gew.-%igen wässrigen Polystyrolsaatdispersion (mittlerer Teilchendurchmesser 32 nm) und 205,73 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 39,09 g | 7 gew.-%ige wässrige Lösung von Natriumpersulfat |
| Zulauf 2: | 86,24 g | Wasser |
| | 72,00 g | 20 gew.-%ige wässrige Lösung von Natriumdodecylbenzylsulfonat |
| | 12,00 g | Acrylsäure (AS) |
| | 0,24 g | 2-Ethylhexylthioglykolat |
| | 48,00 g | 2-Ethylhexylacrylat (EHA) |
| | 192,00 g | Styrol (S) |
| | 48,00 g | Acrylnitril (AN) |
| | 228,00 g | n-Butylacrylat (nBA) |

Dann wurden 8,98 g Wasser zum Reaktor gegeben und die Reaktionsmischung für 30 min bei 85 °C gerührt, dann wurden erneut 13,49 g Wasser zugegeben. Zur chemischen Desodorierung wurden folgende zwei Mischungen als zwei separate Zuläufe mit konstanter Zulaufrate über 2h zugegeben: a) 20,16 g einer 10%igen wässrigen Lösung von tert-Butylhydroperoxid, b) 19,42 g einer 13,1 %igen Lösung von Natriumacetonbisulfit und 1,01 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 5,76 g einer 25%igen wässrigen Ammoniaklösung innerhalb von 30 min zugegeben sowie anschließend 63,94 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 54,1% bei einem pH-Wert von 6,0 auf. Der LD beträgt LD = 71 (Die Bestimmung der mittleren Teilchendurchmesser erfolgt über die Methode der quasielastischen Lichtstreuung (ISO-Norm 13 321)] und die Viskosität beträgt 312 mPas (gemessen bei 500 Umdrehungen pro Sekunde).

## Vergleichsbeispiel 6

In einem Glasreaktor ausgerüstet mit einem Rührer, Dosiereinrichtungen, Temperaturfühler sowie Rückflusskühler wurde bei Raumtemperatur eine Mischung von 266,35 g Wasser, 4,22 g einer 9,1 gew.-%igen wässrigen Lösung von L(+)-Ascorbinsäure, 0,58 g einer 33 gew.-%igen wässrigen Polystyrolsaatdispersion (mittlerer Teilchendurchmesser 32 nm) und 205,73 g eines Maltodextrins (DE-Wert 16.5-19.9) vorgelegt, mit Stickstoff gespült und unter Rühren auf 85 °C aufgeheizt. Bei Erreichen der Temperatur wurden 10% des Zulaufs 1 innerhalb von 2 min zum Reaktor gegeben und 3 min bei dieser Temperatur eingerührt. Anschließend wurden die verbleibende Menge des Zulaufs 1 sowie Zulauf 2 gleichzeitig gestartet und auf die folgende Weise zugegeben unter Aufrechterhaltung der vorgenannten Temperatur: a) Zulauf 1: 59,6% des verbleibenden Zulaufs 1 wurden innerhalb 2h 15 min zugegeben, anschließend die restliche Zulaufmenge des Zulaufs 1 (40,4%) innerhalb von 1h. b) Zulauf 2 wurde mittels folgenden Dosierprofils zugegeben: aufeinanderfolgender Zulauf von 1,16% in 7 min, 2,31% in 8 min, 3,47% in 7 min, 4,62% in 8 min, 78,73% in 2 h 17 min, 1,5% in 3 min, 0,75% in 2 min und 7,46% in 23 min.

| | | |
|---|---|---|
| Zulauf 1: | 39,09 g | 7 gew.-%ige wässrige Lösung von Natriumpersulfat |
| Zulauf 2: | 86,24 g | Wasser |
| | 72,00 g | 20 gew.-%ige wässrige Lösung von Natriumdodecylbenzylsulfonat |
| | 12,00 g | Acrylsäure (AS) |
| | 0,24 g | 2-Ethylhexylthioglykolat |
| | 48,00 g | 2-Ethylhexylacrylat (EHA) |
| | 288,00 g | Styrol (S) |
| | 48,00 g | Acrylnitril (AN) |
| | 108,00 g | n-Butylacrylat (nBA) |

Dann wurden 8,98 g Wasser zum Reaktor gegeben und die Reaktionsmischung für 30 min bei 85 °C gerührt, dann wurden erneut 13,49 g Wasser zugegeben. Zur chemischen Desodorierung wurden folgende zwei Mischungen als zwei separate Zuläufe mit konstanter Zulaufrate über 2h zugegeben: a) 20,16 g einer 10%igen wässrigen Lösung von tert-Butylhydroperoxid, b) 19,42 g einer 13,1 %igen Lösung von Natriumacetonbisulfit und 1,01 g Wasser. Nach 30 min wurde die Temperatur innerhalb von 15 min kontinuierlich auf 70 °C gesenkt und dann bei dieser Temperatur gehalten, wobei ein leichter Stickstoffstrom durch die Apparatur und eine angeschlossene Kühlfalle mit Trockeneis geleitet wurde. Dann wurden 5,76 g einer 25%igen wässrigen Ammoniaklösung innerhalb von 30 min zugegeben sowie anschließend 63,94 g Wasser zugegeben. Die Dispersion wurde auf Raumtemperatur abgekühlt, Biozide zugegeben und filtriert.

Die in dem Beispiel erhaltene Dispersion weist einen Feststoffgehalt von 54,3% bei einem pH-Wert von 6,7 auf. Der LD beträgt LD = 64 (Die Bestimmung der mittleren Teilchendurchmesser erfolgt über die Methode der quasielastischen Lichtstreuung (ISO-Norm 13 321)] und die Viskosität beträgt 292 mPas (gemessen bei 500 Umdrehungen pro Sekunde).

## Formulierung der Vergleichsbeispiele 2, 3, 4, 5 und 6:

Die Vergleichsformulierungen 2, 3, 4, 5 und 6 werden aus den in den Vergleichsbeispielen 2, 3, 4, 5 und 6

hergestellten Polymerisatdispersionen und weiteren Komponenten hergestellt. Die Vergleichsdispersion 1 wird genauso formuliert, und ergibt die Vergleichsformulierung 1e. Das Herstellen der Vergleichsformulierungen 2, 3, 4, 5 und 6 und der Vergleichsformulierung 1e erfolgt folgendermaßen:
Unter Rühren werden bei 23 °C den 27,3 Gew.-Teilen Dispersion, 8,6 Gew.-Teile Rheovis AS 1125 (Verdicker; bei den Vergleichsformulierungen 2, 3, 4, 5 und 6 in Form einer 2 %igen Lösung, bei der Vergleichsformulierung 1e in Form einer 3%igen Lösung) zugegeben. Anschließend werden 19 Gew.-Teile einer heißen Harzmischung (Tackifier; Mischung bestehend aus 50 Gew.-% Dercol M10, 50 Gew.-% Bremasin 1601; wird vor der Zugabe auf 95 °C erwärmt), innerhalb 15 Minuten unter Rühren zugegeben, und noch 10 Minuten nachgerührt. 0,5 Gew.-Teile Emulphor FAS30 (Emulgator), 0,3 Gew.-Teile FoamStar SI 2210 (Entschäumer), 1,0 Gew.-Teil Dispex AA4135 (Pigmentverteiler) und 0,4 Gew.-Teile Hydropalat WE 3185 (Benetzungsmittel) werden nacheinander unter Rühren zugegeben. Anschließend werden 42,9 Gew.-Teile Omyacarb 10 GU (Füllstoff) unter Rühren eingemischt und weitere 10 Minuten nachgerührt.

**Bestimmung des Nassanzugvermögens:**

Die Formulierung wird als Klebstoff mit der Zahnleiste TKB B 1 auf Faserzementplatten (zB. Eternit® 2000, 500 x 200 mm) in Abzugsrichtung aufgetragen. Die applizierte Menge beträgt ca. 300 - 350 g/$m^2$. NBB (Nadelfilz-Bodenbelag Finett 11) Streifen (150 x 50 x 5,2 mm) werden nach 10 Minuten ablüften in das Klebstoffbett eingelegt u. mit einer 2,5 kg Walze durch dreimal Hin- u. Herrollen angepresst. In Zeitabständen (10, 20, 30 u. 40 Minuten) werden die Beläge mit einem Abzugsgerät abgezogen und die Zunahme des Abschälwiderstandes (in N/5cm) bestimmt.

**Bestimmung des Trockenanfass-Vermögens:**

Die Formulierung wird als Klebstoff mit der Zahnleiste TKB A2 auf Faserzementplatten (zB. Eternit® 2000, 500 x 200 mm) in Abzugsrichtung aufgetragen. Die applizierte Menge beträgt ca. 280 - 320 g/$m^2$. PVC-Streifen (Tarkett Standard 2 mm; 150 x 50 x 2 mm) werden nach unterschiedlicher Ablüftzeit (30, 40, 50 u. 60 Minuten) in das Klebstoffbett eingelegt und mit einer 2,5 kg Walze durch dreimal Hin- u. Herrollen angepresst. Anschließend werden die Streifen mit einem Abzugsgerät abgezogen und die Zunahme des Abschälwiderstandes (in N/5cm) bestimmt.

In der folgenden Tabelle 6 werden die Vergleichsformulierungen 2, 3, 4, 5 und 6 und die Vergleichsformulierung 1e gegenübergestellt. Wie aus Tabelle 6 ersichtlich ist, weisen die aus den nicht erfindungsgemäßen Vergleichsdispersionen 2, 3, 4, 5 und 6 hergestellten Vergleichsformulierungen 2, 3, 4, 5 und 6 im Vergleich zu Vergleichsdispersion 1e kein verbessertes Trockenanfass-Vermögen bei erhaltenem Nassanzugsvermögen auf.

**Tabelle 6**

| Prüfung | Prüfung nach | Ablüftzeit | Vergleichsformulierung 1e (in N/5 cm) | Vergleichsformulierung 2 (in N/5 cm) | Vergleichsformulierung 3 (in N/5 cm) | Vergleichsformulierung 4 (in N/5 cm) | Vergleichsformulierung 5 (in N/5 cm) | Vergleichsformulierung 6 (in N/5 cm) |
|---|---|---|---|---|---|---|---|---|
| Nassanzugvermögen | 10 min | 10 min | 6 | 8 | 11 | 15 | 5 | 1 |
| | 20 min | 10 min | 15 | 22 | 22 | 27 | 14 | 4 |
| | 30 min | 10 min | 26 | 27 | 33 | 28 | 17 | 6 |
| | 40 min | 10 min | 35 | 35 | 34 | 43 | 15 | 8 |
| Trockenanfassvermögen | 30 min | 30 min | 6 | 17 | 21 | 24 | 11 | 3 |
| | 40 min | 40 min | 16 | 20 | 16 | 28 | 8 | 3 |
| | 50 min | 50 min | 20 | 13 | 6 | 7 | 4 | 2 |
| | 60 min | 60 min | 18 | 6 | 3 | 6 | 1 | 1 |

**Patentansprüche**

1. Polymerisatdispersion, umfassend

    A) mindestens eine erste Phase, enthaltend

        a) wenigstens ein Polymerisat P, ausschließlich aufgebaut aus
        1 bis 99,9 Gew.-% wenigstens eines Esters aus ethylenisch ungesättigten Monomeren, als Monomer A,
        0 bis 20 Gew.-% wenigstens eines ethylenisch ungesättigten Carbonsäurenitrils, als Monomer B,
        0,1 bis 5 Gew.-% wenigstens eines säuregruppenhaltigen ethylenisch ungesättigten Monomeren, als Monomer C,
        0 bis 5 Gew.-% wenigstens eines Monomeren, das allein oder mit einem Vernetzungsmittel vernetzend wirkt und welches verschieden ist von den Monomeren A bis C, als Monomer D,
        0 bis 10 Gew.-% wenigstens eines ethylenisch ungesättigten Monomeren, dessen Homopolymerisat eine Glasübergangstemperatur $\geq$ 50 °C aufweist und welches sich von den Monomeren A bis D unterscheidet, als Monomer E ausgewählt aus der Gruppe bestehend aus Styrol, $\alpha$-Methylstyrol, o- oder p-Vinyltoluol, p-Acetoxystyrol, p-Bromstyrol, p-tert.-Butylstyrol, o-, m- oder p-Chlorstyrol, Methylmethacrylat, tert.-Butylmethacrylat, Ethylmethacrylat, Isobutylmethacrylat, Cyclohexylmethacrylat, tert.-Butylvinylether oder Cyclohexylvinylether,
        wobei die Summe der Gesamtmenge der Monomere A bis E 100 Gew.-% ergibt,
        a1) gegebenenfalls mindestens eine Polymersaat,
        b) 10 bis 60 Gew.-Teile, bezogen auf 100 Gew.-Teile Polymerisat P, wenigstens einer Saccharidverbindung S, und

    B) eine zweite Phase, enthaltend

        c) mindestens ein Lösungsmittel.

2. Polymerisatdispersion nach Anspruch 1, wobei die Polymerisatdispersion eine wässrige Polymerisatdispersion ist.

3. Polymerisatdispersion nach Anspruch 1 oder 2, wobei das Monomer B Acrylnitril und/oder Methacrylnitril ist.

4. Polymerisatdispersion nach einem der Ansprüche 1 bis 3, wobei das Polymerisat P eine Glasübergangstemperatur Tg von $\leq$ -10 °C aufweist.

5. Polymerisatdispersion nach einem der Ansprüche 1 bis 4, enthaltend 45 bis 400 Gew.-% Lösungsmittel, bezogen auf 100 Gew.-% Polymerisat P.

6. Polymerisatdispersion nach einem der Ansprüche 1 bis 5, wobei die Saccharidverbindung S ausgewählt ist aus der Gruppe bestehend aus Stärke, Cellulose, Guaran, Xanthan, Alginat, Pectin, Chitosan, Gummi Arabicum, Gellan oder Mischungen daraus.

7. Polymerisatdispersion nach einem der Ansprüche 1 bis 6, wobei als Saccharidverbindung S eine Stärke, ein Stärkederivat und/oder deren Substitutionsprodukte eingesetzt wird.

8. Polymerisatdispersion nach einem der Ansprüche 1 bis 7, wobei die Saccharidverbindung S einen DE-Wert (Dextrose Äquivalent-Wert) in einem Bereich von 1 bis 40 aufweist.

9. Polymerisatdispersion nach einem der Ansprüche 1 bis 8, wobei die Saccharidverbindung S Maltodextrin ist.

10. Polymerisatpulver, erhältlich durch Trocknen der Polymerisatdispersion gemäß einem der Ansprüche 1 bis 9.

11. Verfahren zur Herstellung einer Polymerisatdispersion nach einem der Ansprüche 1 bis 9, umfassend die Schritte:

    I.) Bereitstellen mindestens einer ersten Phase, enthaltend
    wenigstens ein Polymerisat P, ausschließlich aufgebaut aus
    1 bis 99,9 Gew.-% wenigstens eines Esters aus ethylenisch ungesättigten Monomeren, als Monomer A,
    0 bis 20 Gew.-% wenigstens eines ethylenisch ungesättigten Carbonsäurenitrils, als Monomer B,

0,1 bis 5 Gew.-% wenigstens eines säuregruppenhaltigen ethylenisch ungesättigten Monomeren, als Monomer C,
0 bis 5 Gew.-% wenigstens eines Monomeren, das allein oder mit einem Vernetzungsmittel vernetzend wirkt und welches verschieden ist von den Monomeren A bis C, als Monomer D,
0 bis 10 Gew.-% wenigstens eines ethylenisch ungesättigten Monomeren, dessen Homopolymerisat eine Glasübergangstemperatur ≥ 50 °C aufweist und welches sich von den Monomeren A bis D unterscheidet, als Monomer E ausgewählt aus der Gruppe bestehend aus Styrol, α-Methylstyrol, o- oder p-Vinyltoluol, p-Acetoxystyrol, p-Bromstyrol, p-tert.-Butylstyrol, o-, m- oder p-Chlorstyrol, Methylmethacrylat, tert.-Butylmethacrylat, Ethylmethacrylat, Isobutylmethacrylat, Cyclohexylmethacrylat, aber beispielsweise auch tert.-Butylvinylether oder Cyclohexylvinylether,
wobei die Summe der Gesamtmenge der Monomere A bis E 100 Gew.-% ergibt,

a1) gegebenenfalls mindestens eine Polymersaat,
b) 10 bis 60 Gew.-Teile, bezogen auf 100 Gew.-Teile Polymerisat P, wenigstens einer Saccharidverbindung S und

II.) Bereitstellen einer zweiten Phase, enthaltend

c) mindestens ein Lösungsmittel.

**12.** Wässrige Formulierung zum Kleben, umfassend

i) die Polymerisatdispersion gemäß einem der Ansprüche 1 bis 9 oder das durch Trocknen daraus erhältliche Polymerisatpulver gemäß Anspruch 10 als Bindemittel, wobei der aus der Polymerisatdispersion oder aus dem Polymerisatpulver stammende Feststoffgehalt in der Formulierung 5 bis 90 Gew.-% beträgt, bezogen auf den Gesamtfeststoffgehalt der Formulierung.

**13.** Formulierung nach Anspruch 12, umfassend zusätzlich ii) mindestens einen Füllstoff.

**14.** Formulierung nach Anspruch 13, wobei der Füllstoff Calciumcarbonat mit einem mittleren Partikeldurchmesser von 2 bis 50 μm ist oder ein Quarzmehl mit einem mittleren Partikeldurchmesser von 3 bis 50 μm oder eine Kombination der beiden Stoffe ist.

**15.** Formulierung nach einem der Ansprüche 12 bis 14, umfassend zusätzlich iii) mindestens einen Klebrigmacher (Tackifier).

**16.** Verwendung der Formulierung nach einem der Ansprüche 12 bis 15 als Klebstoff, besonders bevorzugt als Bodenbelagsklebstoff.

## Claims

**1.** A polymer dispersion comprising

A) at least one first phase comprising

a) at least one chain growth addition polymer P constructed exclusively from
1 to 99.9 wt% of at least one ester from ethylenically unsaturated monomers, as monomer A,
0 to 20 wt% of at least one ethylenically unsaturated carbonitrile, as monomer B,
0.1 to 5 wt% of at least one acid-functional ethylenically unsaturated monomer, as monomer C,
0 to 5 wt% of at least one monomer which, alone or with a crosslinking agent, has crosslinking effect and which is different from the monomers A to C, as monomer D,
0 to 10 wt% of at least one ethylenically unsaturated monomer which forms a chain growth addition homopolymer having a glass transition temperature ≥ 50°C and which is different from the monomers A to D, as monomer E, selected from the group consisting of styrene, α-methylstyrene, o- or p-vinyltoluene, p-acetoxystyrene, p-bromostyrene, p-tert-bytylstyrene, o-, m-, or p-chlorostyrene, methyl methacrylate, tert-butyl methacrylate, ethyl methacrylate, isobutyl methacrylate, cyclohexyl methacrylate, tert-butyl vinyl ether or cyclohexyl vinyl ether,

the sum of the total amount of the monomers A to E making 100 wt%,

a1) optionally at least one polymer seed,

b) 10 to 60 parts by weight, based on 100 parts by weight of polymer P, of at least one saccharide compound S, and

B) a second phase comprising

c) at least one solvent.

**2.** The polymer dispersion according to claim 1, which is an aqueous polymer dispersion.

**3.** The polymer dispersion according to claim 1 or 2, wherein the monomer B is acrylonitrile and/or methacrylonitrile.

**4.** The polymer dispersion according to any of claims 1 to 3, wherein the chain growth addition polymer P has a glass transition temperature Tg of ≤ -10°C.

**5.** The polymer dispersion according to any of claims 1 to 4, comprising 45 to 400 wt% of solvent, based on 100 wt% of chain growth addition polymer P.

**6.** The polymer dispersion according to any of claims 1 to 5, wherein the saccharide compound S is selected from the group consisting of starch, cellulose, guaran, xanthan, alginate, pectin, chitosan, gum arabic, gellan, or mixtures thereof.

**7.** The polymer dispersion according to any of claims 1 to 6, wherein saccharide compound S used is a starch, starch derivative and/or substitution products thereof.

**8.** The polymer dispersion according to any of claims 1 ot 7, wherein the saccharide compound S has a DE (dextrose equivalent) value in a range from 1 to 40.

**9.** The polymer dispersion according to any of claims 1 to 8, wherein the saccharide compound S is maltodextrin.

**10.** A chain growth addition polymer powder obtainable by drying the polymer dispersion according to any of claims 1 to 9.

**11.** A method for producing a polymer dispersion according to any of claims 1 to 9, comprising the steps of:

I.) providing at least one first phase comprising
at least one chain growth addition polymer P constructed exclusively from
1 to 99.9 wt% of at least one ester from ethylenically unsaturated monomers, as monomer A,
0 to 20 wt% of at least one ethylenically unsaturated carbonitrile, as monomer B,
0.1 to 5 wt% of at least one acid-functional ethylenically unsaturated monomer, as monomer C,
0 to 5 wt% of at least one monomer which, alone or with a crosslinking agent, has crosslinking effect and which is different from the monomers A to C, as monomer D,
0 to 10 wt% of at least one ethylenically unsaturated monomer which forms a chain growth addition homopolymer having a glass transition temperature ≥ 50°C and which is different from the monomers A to D, as monomer E, selected from the group consisting of styrene, $\alpha$-methylstyrene, o- or p-vinyltoluene, p-acetoxystyrene, p-bromostyrene, p-tert-butylstyrene, o-, m-, or p-chlorostyrene, methyl methacrylate, tert-butyl methacrylate, ethyl methacrylate, isobutyl methacrylate, cyclohexyl methacrylate, but also, for example, tert-butyl vinyl ether or cyclohexyl vinyl ether,
the sum of the total amount of the monomers A to E making 100 wt%,

a1) optionally at least one polymer seed,

b) 10 to 60 parts by weight, based on 100 parts by weight of polymer P, of at least one saccharide compound S, and

II.) providing a second phase comprising

c) at least one solvent.

**12.** An aqueous formulation for adhesive bonding, comprising

i) the polymer dispersion according to any of claims 1 to 9, or the polymer powder obtainable therefrom by drying, according to claim 10, as binder, the formulation having a solids content originating from the polymer dispersion or from the polymer powder of 5 to 90 wt%, based on the total solids content of the formulation.

**13.** The formulation according to claim 12, further comprising ii) at least one filler.

**14.** The formulation according to claim 13, wherein the filler is calcium carbonate having an average particle diameter of 2 to 50 μm or is finely ground quartz having an average particle diameter of 3 to 50 μm, or is a combination of the two substances.

**15.** The formulation according to any of claims 12 to 14, further comprising iii) at least one tackifier.

**16.** The use of the formulation according to any of claims 12 to 15 as an adhesive, more preferably as a flooring adhesive.

**Revendications**

**1.** Dispersion de polymère, comprenant :

A) au moins une première phase, contenant :

a) au moins un polymère P, exclusivement constitué par :

1 à 99,9 % en poids d'au moins un ester de monomères éthyléniquement insaturés, en tant que monomère A,
0 à 20 % en poids d'au moins un nitrile d'acide carboxylique éthyléniquement insaturé, en tant que monomère B,
0,1 à 5 % en poids d'au moins un monomère éthyléniquement insaturé contenant des groupes acides, en tant que monomère C,
0 à 5 % en poids d'au moins un monomère qui a un effet réticulant seul ou avec un agent de réticulation, et qui est différent des monomères A à C, en tant que monomère D,
0 à 10 % en poids d'au moins un monomère éthyléniquement insaturé, dont l'homopolymère présente une température de transition vitreuse ≥ 50 °C et qui est différent des monomères A à D, en tant que monomère E choisi dans le groupe constitué par le styrène, l'α-méthylstyrène, l'o- ou le p-vinyltoluène, le p-acétoxystyrène, le p-bromo-styrène, le p-tert.-butylstyrène, l'o-, le m- ou le p-chlorostyrène, le méthacrylate de méthyle, le méthacrylate de tert.-butyle, le méthacrylate d'éthyle, le méthacrylate d'isobutyle, le méthacrylate de cyclohexyle, l'éther de tert.-butyle et de vinyle ou l'éther de cyclohexyle et de vinyle,
la somme de la quantité totale des monomères A à E étant de 100 % en poids,

a1) éventuellement au moins un germe polymère,
b) 10 à 60 parties en poids, par rapport à 100 parties en poids de polymère P, d'au moins un composé de saccharide S, et

B) une deuxième phase, contenant :

c) au moins un solvant.

**2.** Dispersion de polymère selon la revendication 1, dans laquelle la dispersion de polymère est une dispersion aqueuse de polymère.

**3.** Dispersion de polymère selon la revendication 1 ou 2, dans laquelle le monomère B est l'acrylonitrile et/ou le méthacrylonitrile.

**4.** Dispersion de polymère selon l'une quelconque des revendications 1 à 3, dans laquelle le polymère P présente une température de transition vitreuse Tg ≤-10 °C.

**5.** Dispersion de polymère selon l'une quelconque des revendications 1 à 4, contenant 45 à 400 % en poids de solvant, par rapport à 100 % en poids de polymère P.

**6.** Dispersion de polymère selon l'une quelconque des revendications 1 à 5, dans laquelle le composé de saccharide S est choisi dans le groupe constitué par l'amidon, la cellulose, la gomme de guar, le xanthane, l'alginate, la pectine, le chitosan, la gomme arabique, la gomme gellane ou leurs mélanges.

**7.** Dispersion de polymère selon l'une quelconque des revendications 1 à 6, dans laquelle un amidon, un dérivé d'amidon et/ou leurs produits de substitution sont utilisés en tant que composé de saccharide S.

**8.** Dispersion de polymère selon l'une quelconque des revendications 1 à 7, dans laquelle le composé de saccharide S présente une valeur DE (valeur d'équivalent de dextrose) dans une plage allant de 1 à 40.

**9.** Dispersion de polymère selon l'une quelconque des revendications 1 à 8, dans laquelle le composé de saccharide S est la maltodextrine.

**10.** Poudre de polymère, pouvant être obtenue par séchage de la dispersion de polymère selon l'une quelconque des revendications 1 à 9.

**11.** Procédé de fabrication d'une dispersion de polymère selon l'une quelconque des revendications 1 à 9, comprenant les étapes suivantes :

I.) la préparation d'au moins une première phase, contenant :
au moins un polymère P, exclusivement constitué par :

1 à 99,9 % en poids d'au moins un ester de monomères éthyléniquement insaturés, en tant que monomère A,
0 à 20 % en poids d'au moins un nitrile d'acide carboxylique éthyléniquement insaturé, en tant que monomère B,
0,1 à 5 % en poids d'au moins un monomère éthyléniquement insaturé contenant des groupes acides, en tant que monomère C,
0 à 5 % en poids d'au moins un monomère qui a un effet réticulant seul ou avec un agent de réticulation, et qui est différent des monomères A à C, en tant que monomère D,
0 à 10 % en poids d'au moins un monomère éthyléniquement insaturé, dont l'homopolymère présente une température de transition vitreuse ≥ 50 °C et qui est différent des monomères A à D, en tant que monomère E choisi dans le groupe constitué par le styrène, l'α-méthylstyrène, l'o- ou le p-vinyltoluène, le p-acétoxystyrène, le p-bromo-styrène, le p-tert.-butylstyrène, l'o-, le m- ou le p-chlorostyrène, le méthacrylate de méthyle, le méthacrylate de tert.-butyle, le méthacrylate d'éthyle, le méthacrylate d'isobutyle, le méthacrylate de cyclohexyle, mais par exemple également l'éther de tert.-butyle et de vinyle ou l'éther de cyclohexyle et de vinyle,
la somme de la quantité totale des monomères A à E étant de 100 % en poids,

a1) éventuellement au moins un germe polymère,
b) 10 à 60 parties en poids, par rapport à 100 parties en poids de polymère P, d'au moins un composé de saccharide S, et

II.) la préparation d'une deuxième phase, contenant :

c) au moins un solvant.

**12.** Formulation aqueuse pour le collage, comprenant :

i) la dispersion de polymère selon l'une quelconque des revendications 1 à 9 ou la poudre de polymère pouvant être obtenue par séchage de celle-ci selon la revendication 10 en tant que liant, la teneur en solides de la dispersion de polymère ou de la poudre de polymère dans la formulation étant de 5 à 90 % en poids, par rapport à la teneur en solides totale de la formulation.

**13.** Formulation selon la revendication 12, comprenant en outre ii) au moins une charge.

**14.** Formulation selon la revendication 13, dans laquelle la charge est le carbonate de calcium ayant un diamètre de particule moyen de 2 à 50 μm ou une farine de quartz ayant un diamètre de particule moyen de 3 à 50 μm ou une combinaison des deux matières.

**15.** Formulation selon l'une quelconque des revendications 12 à 14, comprenant en outre iii) au moins un agent adhésif (agent collant).

**16.** Utilisation de la formulation selon l'une quelconque des revendications 12 à 15 en tant qu'adhésif, de manière particulièrement préférée en tant qu'adhésif pour revêtement de sol.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007020201 A
- US 7112626 B
- DE 19725038
- WO 2012117017 A1
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 3360599 A
- US 3238173 A
- US 3726824 A
- US 3734686 A
- US 6207756 A
- EP 0789724 A
- EP 441197 A
- US 4269749 A
- US 2520959 A
- US 3397165 A


### In der Beschreibung aufgeführte Nicht-Patentliteratur


- Emulsionspolymerisation in Encyclopedia of Polymer Science and Engineering. 1987, vol. 8, 659
- **D.C. BLACKLEY.** *High Polymer Latices,* 1966, vol. 1, 35
- **H. WARSON.** The Applications of Synthetic Resin Emulsions. 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **ECKERSLEY et al.** *Am. Chem. Soc, Div. Polymer Chemistry,* 1977, vol. 38 (2), 630, , 631
- **GÜNTHER TEGGE.** Stärke und Stärkederivate. Behr's Verlag, 1984, 173, , 220
- Auch Ullman's Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956, vol. II, 123
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- Ullmann's Encyclopedia of Industrial Chemistry. Verlag Chemie, 1992, 169
- **GÜNTHER TEGGEL.** Stärke und Stärkederivate. Behr's Verlag, 1984, 305
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175